# EUROPEAN PATENT SPECIFICATION

(11) **EP 3 160 230 B1**
(45) Date of publication and mention of the grant of the patent: **01.11.2023**
(21) Application number: 15730498.1
(22) Date of filing: 19.06.2015
(51) Int. Cl.: A01N 43/80, A01N 43/56, A01N 33/18, A01N 37/22, A01N 43/10, A01N 25/04, A01P 13/00

(54) **FORMULATION OF CLOMAZONE HAVING REDUCED VOLATILITY**
FORMULIERUNG VON CLOMAZON MIT REDUZIERTER FLÜCHTIGKEIT
FORMULATION DE CLOMAZONE AYANT UNE VOLATILITÉ RÉDUITE

(30) Priority: 25.06.2014 EP 14173983
(43) Date of publication of application: 03.05.2017
(73) Proprietor: BASF SE, 67056 Ludwigshafen am Rhein (DE)
(72) Inventor: STEINBRENNER, Ulrich, 67435 Neustadt (DE); SCHAEFER, Ansgar, 76199 Karlsruhe (DE); MORAN PUENTE, Diana Westfalia, 69226 Nußloch (DE); HENKES, Steffen, 67459 Boehl-Iggelheim (DE)
(74) Representative: BASF IP Association
(86) International application number: PCT/EP2015/063813
(87) International publication number: WO 2015/197487

(56) References cited:
- EP-A2- 0 614 606
- WO-A1-2005/015999
- WO-A2-2013/004707
- CN-A- 1 276 153
- CN-A- 1 286 907
- CN-A- 1 294 853
- CN-A- 1 486 609
- CN-A- 1 802 912
- CN-A- 102 365 965
- CN-A- 102 640 759
- CN-A- 103 380 773
- CN-A- 103 828 818
- RU-C2- 2 319 379
- US-A1- 2009 181 850
- US-A1- 2010 130 364
- US-A1- 2011 015 069
- US-A1- 2011 059 849
- US-A1- 2014 031 231
- US-B2- 8 124 564
- DATABASE CA [Online] CHEMICAL ABSTRACTS SERVICE, COLUMBUS, OHIO, US; TUEMMLER, CHRISTINE ET AL: "Weed Control in Lupins: Findings from 10 Years Gap Indication", XP002731024, retrieved from STN Database accession no. 2012:1762359 & TUEMMLER, CHRISTINE ET AL: "Weed Control in Lupins: Findings from 10 Years Gap Indication", GESUNDE PFLANZEN , 64(4), 149-166 CODEN: GEPFAG; ISSN: 0367-4223, 2012, DOI: 10.1007/S10343-012-0284-Z 10.1007/S10343-012-0284-Z
- DATABASE CA [Online] CHEMICAL ABSTRACTS SERVICE, COLUMBUS, OHIO, US; CORREA DA SILVA, JUNIA VIANNA ET AL: "Soybean cultivar performance in the presence of soybean Asian rust, in relation to chemical control programs", XP002731025, retrieved from STN Database accession no. 2011:1251970 & CORREA DA SILVA, JUNIA VIANNA ET AL: "Soybean cultivar performance in the presence of soybean Asian rust, in relation to chemical control programs", EUROPEAN JOURNAL OF PLANT PATHOLOGY , 131(3), 409-418 CODEN: EPLPEH; ISSN: 0929-1873, 2011, DOI: 10.1007/S10658-011-9818-Y 10.1007/S10658-011-9818-Y
- DATABASE CA [Online] CHEMICAL ABSTRACTS SERVICE, COLUMBUS, OHIO, US; FERNANDES, A. L. T. ET AL: "Efficiency of cyproconazole + thiamethoxan, within a program of use, applied via drip irrigation water in the control of coffee leaf rust", XP002731026, retrieved from STN Database accession no. 2009:787318 & FERNANDES, A. L. T. ET AL: "Efficiency of cyproconazole + thiamethoxan, within a program of use, applied via drip irrigation water in the control of coffee leaf rust", COLLOQUE SCIENTIFIQUE INTERNATIONAL SUR LE CAFE , 22ND, 1395-1399 CODEN: CICRD8; ISSN: 1029-3701, 2008,
- DATABASE CA [Online] CHEMICAL ABSTRACTS SERVICE, COLUMBUS, OHIO, US; FERNANDES, A. L. T. ET AL: "Evaluation of the effect of the fungicide priorixtra (azoxystrobin + cyproconazole) on the control of leaf rust and Cercospora of irrigated coffee fields, irrigated by the net sprinkler irrigation system", XP002731027, retrieved from STN Database accession no. 2009:787316 & FERNANDES, A. L. T. ET AL: "Evaluation of the effect of the fungicide priorixtra (azoxystrobin + cyproconazole) on the control of leaf rust and Cercospora of irrigated coffee fields, irrigated by the net sprinkler irrigation system", COLLOQUE SCIENTIFIQUE INTERNATIONAL SUR LE CAFE , 22ND, 1390-1394 CODEN: CICRD8; ISSN: 1029-3701, 2008,
- DATABASE CA [Online] CHEMICAL ABSTRACTS SERVICE, COLUMBUS, OHIO, US; ROLA, JOZEF ET AL: "Problem of weed infestation of Salix viminalis plantations", XP002731028, retrieved from STN Database accession no. 2007:1380371 & ROLA, JOZEF ET AL: "Problem of weed infestation of Salix viminalis plantations", PROGRESS IN PLANT PROTECTION , 46(1), 81-87 CODEN: PPLPF3; ISSN: 1427-4337, 2006,
- DATABASE CA [Online] CHEMICAL ABSTRACTS SERVICE, COLUMBUS, OHIO, US; ANYSZKA, ZBIGNIEW: "Efficacy of clomazone for weed control in head cabbage", XP002731029, retrieved from STN Database accession no. 2006:506313 & ANYSZKA, ZBIGNIEW: "Efficacy of clomazone for weed control in head cabbage", PROGRESS IN PLANT PROTECTION , 45(2), 565-567 CODEN: PPLPF3; ISSN: 1427-4337, 2005,
- DATABASE CA [Online] CHEMICAL ABSTRACTS SERVICE, COLUMBUS, OHIO, US; SOLTANI, NADER ET AL: "White bean sensitivity to preemergence herbicides", XP002731030, retrieved from STN Database accession no. 2004:935196 & SOLTANI, NADER ET AL: "White bean sensitivity to preemergence herbicides", WEED TECHNOLOGY , 18(3), 675-679 CODEN: WETEE9; ISSN: 0890-037X, 2004, DOI: 10.1614/WT-03-130R 10.1614/WT-03-130R
- DATABASE CA [Online] CHEMICAL ABSTRACTS SERVICE, COLUMBUS, OHIO, US; MATYSIAK, K. ET AL: "Selectivity of herbicides for weed control in white mustard and (Sinapis alba L.) and brown mustard (Brassica juncea L.)", XP002731031, retrieved from STN Database accession no. 2003:543616 & MATYSIAK, K. ET AL: "Selectivity of herbicides for weed control in white mustard and (Sinapis alba L.) and brown mustard (Brassica juncea L.)", WAGENINGEN 2000, PROCEEDINGS - EWRS SYMPOSIUM, 12TH, PAPENDAL, NETHERLANDS, JUNE 24-27, 2002 , 194-195. EDITOR(S): VAN LAAR, H. H. PUBLISHER: EWRS SYMPOSIUM W2002, DOORWERTH, NETH. CODEN: 69EETK; ISBN: 90-6754-671-2, 2002,
- DATABASE CA [Online] CHEMICAL ABSTRACTS SERVICE, COLUMBUS, OHIO, US; FRANEK, MARIAN: "Reaction of oilseed rape varieties to herbicides", XP002731032, retrieved from STN Database accession no. 2002:810818 & FRANEK, MARIAN: "Reaction of oilseed rape varieties to herbicides", PROGRESS IN PLANT PROTECTION , 40(1), 401-407 CODEN: PPLPF3; ISSN: 1427-4337, 2000,
- DATABASE CA [Online] CHEMICAL ABSTRACTS SERVICE, COLUMBUS, OHIO, US; ZIMINSKA, ZOFIA ET AL: "Large field studies on information batches of herbicides for oil seed rape", XP002731033, retrieved from STN Database accession no. 2001:555385 & ZIMINSKA, ZOFIA ET AL: "Large field studies on information batches of herbicides for oil seed rape", ORGANIKA , VOLUME DATE 1999-2000 187-192 CODEN: ORGAD2; ISSN: 0137-9933, 2001,
- DATABASE CA [Online] CHEMICAL ABSTRACTS SERVICE, COLUMBUS, OHIO, US; LEWTHWAITE, S. L. ET AL: "Weed control in sweet potatoes", XP002731034, retrieved from STN Database accession no. 2001:382091 & LEWTHWAITE, S. L. ET AL: "Weed control in sweet potatoes", PROCEEDINGS OF THE NEW ZEALAND PLANT PROTECTION CONFERENCE , 53, 262-268 CODEN: PNZCEJ; ISSN: 1172-0719, 2000,
- DATABASE CA [Online] CHEMICAL ABSTRACTS SERVICE, COLUMBUS, OHIO, US; SIEBERHEIN, K. ET AL: "Weeds in winter oilseed rape in Saxony and field trial results of chemical weed control", XP002731035, retrieved from STN Database accession no. 2001:306729 & SIEBERHEIN, K. ET AL: "Weeds in winter oilseed rape in Saxony and field trial results of chemical weed control", GESUNDE PFLANZEN , 53(2), 48-52 CODEN: GEPFAG; ISSN: 0367-4223, 2001,
- DATABASE CA [Online] CHEMICAL ABSTRACTS SERVICE, COLUMBUS, OHIO, US; KRAWCZYK, MARIA ET AL: "Herbicidal effectivity of preparations for weed control in oil seed rape at different temperatures", XP002731036, retrieved from STN Database accession no. 2000:909918 & KRAWCZYK, MARIA ET AL: "Herbicidal effectivity of preparations for weed control in oil seed rape at different temperatures", PROGRESS IN PLANT PROTECTION , 39(2), 752-754 CODEN: PPLPF3; ISSN: 1427-4337, 1999,
- DATABASE CA [Online] CHEMICAL ABSTRACTS SERVICE, COLUMBUS, OHIO, US; ZIMINSKA, ZOFIA ET AL: "Weed control in oil seed rape using preemergence herbicide Pronap 400 EC", XP002731037, retrieved from STN Database accession no. 2000:909915 & ZIMINSKA, ZOFIA ET AL: "Weed control in oil seed rape using preemergence herbicide Pronap 400 EC", PROGRESS IN PLANT PROTECTION , 39(2), 748-751 CODEN: PPLPF3; ISSN: 1427-4337, 1999,
- DATABASE CA [Online] CHEMICAL ABSTRACTS SERVICE, COLUMBUS, OHIO, US; ROLA, HENRYKA ET AL: "Researches on application of new formulation of clomazone (Command 360 CS) on weeds control in oilseed rape", XP002731038, retrieved from STN Database accession no. 2000:909781 & ROLA, HENRYKA ET AL: "Researches on application of new formulation of clomazone (Command 360 CS) on weeds control in oilseed rape", PROGRESS IN PLANT PROTECTION , 39(2), 613-615 CODEN: PPLPF3; ISSN: 1427-4337, 1999,
- DATABASE CA [Online] CHEMICAL ABSTRACTS SERVICE, COLUMBUS, OHIO, US; ZHANG, HAO ET AL: "Control effect of mixing of herbicides to resistant weeds on soybean field", XP002731039, retrieved from STN Database accession no. 2000:152992 & ZHANG, HAO ET AL: "Control effect of mixing of herbicides to resistant weeds on soybean field", NONGYAO , 39(1), 36-38 CODEN: NONGFP; ISSN: 1006-0413, 2000,
- DATABASE CA [Online] CHEMICAL ABSTRACTS SERVICE, COLUMBUS, OHIO, US; BAKUNIAK, EDMUND ET AL: "Pronap 400 EC - A new herbicide for weed control in oilseed rape", XP002731040, retrieved from STN Database accession no. 1999:724383 & BAKUNIAK, EDMUND ET AL: "Pronap 400 EC - A new herbicide for weed control in oilseed rape", PROGRESS IN PLANT PROTECTION , 38(2), 640-642 CODEN: PPLPF3; ISSN: 1427-4337, 1998,
- DATABASE CA [Online] CHEMICAL ABSTRACTS SERVICE, COLUMBUS, OHIO, US; JOHNSON, GREGG A. ET AL: "The stability of weed seedling population models and parameters in eastern Nebraska corn (Zea mays) and soybean (Glycine max) fields", XP002731041, retrieved from STN Database accession no. 1995:977634 & JOHNSON, GREGG A. ET AL: "The stability of weed seedling population models and parameters in eastern Nebraska corn (Zea mays) and soybean (Glycine max) fields", WEED SCIENCE , 43(4), 604-11 CODEN: WEESA6; ISSN: 0043-1745, 1995,
- DATABASE CA [Online] CHEMICAL ABSTRACTS SERVICE, COLUMBUS, OHIO, US; JORDAN, DAVID L. ET AL: "Utility of clomazone for annual grass and broadleaf weed control in peanut (Arachis hypogaea)", XP002731042, retrieved from STN Database accession no. 1994:572978 & JORDAN, DAVID L. ET AL: "Utility of clomazone for annual grass and broadleaf weed control in peanut (Arachis hypogaea)", WEED TECHNOLOGY , 8(1), 23-7 CODEN: WETEE9; ISSN: 0890-037X, 1994,
- DATABASE CA [Online] CHEMICAL ABSTRACTS SERVICE, COLUMBUS, OHIO, US; PENNER, DONALD ET AL: "Herbicide efficacy and tolerance in sweet white lupine", XP002731043, retrieved from STN Database accession no. 1993:422754 & PENNER, DONALD ET AL: "Herbicide efficacy and tolerance in sweet white lupine", WEED TECHNOLOGY , 7(1), 42-6 CODEN: WETEE9; ISSN: 0890-037X, 1993,
- DATABASE CA [Online] CHEMICAL ABSTRACTS SERVICE, COLUMBUS, OHIO, US; ORZOLEK, M. D. ET AL: "New herbicides for pumpkins", XP002731044, retrieved from STN Database accession no. 1987:402530 & ORZOLEK, M. D. ET AL: "New herbicides for pumpkins", PROCEEDINGS OF THE ANNUAL MEETING OF THE NORTHEASTERN WEED SCIENCE SOCIETY , 41, 124-7 CODEN: PNWSBF; ISSN: 0078-1703, 1987,
- RENNER, KAREN A. ET AL: "Response of navy bean (Phaseolus vulgaris) and wheat (Triticum aestivum) grown in rotation to clomazone, imazethapyr, bentazon, and acifluorfen", WEED SCIENCE , 40(1), 127-33 CODEN: WEESA6; ISSN: 0043-1745, 1992, XP002731180,

## Description

### Field of the invention

The present disclosure relates to compositions comprising the herbicide clomazone.

### Background of the invention

Clomazone, the common name for 2-(2-chlorophenyl)methyl-4,4-dimethyl-3-isoxazolidinone, is known to have high herbicidal activity. Clomazone inhibits the biosynthesis of carotinoids in plants and prevents plants from synthesizing chlorophyll thereby allowing efficient weed control.

One important limitation of using clomazone in herbicidal formulations is the high volatility of clomazone. Due to the high volatility of clomazone, the application of clomazone on soil surfaces by common agricultural spray techniques leads to the problem that clomazone may migrate to adjacent areas of the treated soil thereby having the risk of causing undesired plant damage in non-treated areas of the soil. In order to avoid such off-site injury of plants, restrictions for the use of clomazone have been imposed and must be observed in herbicidal control during agricultural production. Such regulatory limitations complicate the application of clomazone in the soil area of interest because herbicidal control must additionally observe weather conditions, spray volumes, the distance to other nearby fields of agricultural production and the like.

In order to overcome the set-backs arising from the relatively high volatility of clomazone, various attempts have been made in the art to reduce the effective volatility of clomazone in herbicidal compositions.

Most prominent have been the microencapsulation of clomazone in herbicidal compositions in order to diminish the effective volatility of clomazone in the resulting herbicidal formulation.

WO 96/14743 A1 suggested herbicidal compositions comprising clomazone in which the volatility of clomazone has been diminished by encapsulating an emulsifiable concentrate of clomazone in a polyurea shell formed from isocyanate and an amine component.

Similarly, WO 00/10392 A1 describes compositions of clomazone with additional herbicides that have been microencapsulated in an additional coating formed by a polymeric polyurea-shell.

WO 05/015999 A1 discloses the microencapsulation of combinations of herbicides like metazachlor and clomazone with further herbicides leading to herbicidal formulations with improved storage stability.

WO 2011/039172 A2 discloses low volatility salts of anionic pesticides including dicamba which is 3,6-dichloro-2-methoxybenzoic acid, and similar herbicidal compounds.

US 2011/059849 A1 discloses herbicidal compositions comprising as active ingredients clomazone and pethoxamid, where the volatility of clomazone was found to be reduced. US 2011/015069 A1 and EP 0614606 A2 both disclose compositions comprising dimethenamid and clomazone.

Accordingly, there is continued interest to provide herbicidal formulations of clomazone with reduced volatility in order to allow herbicidal treatment of soil in a more straightforward manner while further minimizing the risk of injuring sensitive off-target crops or plants.

### Summary of the invention

The present inventors have surprisingly found that compositions with high herbicidal activity and at the same time with significantly lower volatility of clomazone can be prepared by mixing clomazone, preferably non-encapsulated clomazone, with other nitrogen-containing compounds. In such formulations with clomazone the effective volatility of clomazone is surprisingly reduced by the presence of the second component thereby allowing generating herbicidal, clomazone-based formulations which do not need to rely on the previous sophisticated encapsulation technologies for clomazone while still having a clomazone component with excellent herbicidal activity and significantly reduced volatility thereby allowing avoiding the complications usually arising from conventional, highly volatile clomazone.

In addition, those other nitrogen-containing compounds (B) according to the present invention may optionally represent compounds with own herbicidal activity. Accordingly, the claimed herbicidal compositions not only contain a less volatile and therefore more efficient clomazone component but at the same time contain a second additional component with independent herbicidal activity thereby allowing providing herbicidal formulations in which the combined action of different components lead to synergistic herbicidal effects in the treatment of plants and crop.

The present invention is directed to the use of a compound (B) for reducing the volatility of clomazone in a herbicidal composition comprising the step of adding the compound (B) to the herbicidal composition comprising clomazone, wherein the compound (B) is defined by the following formula (lib): 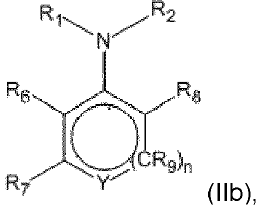
wherein R₁ is selected from -CH₃, -CH₂-CH₃, -(CH₂)₂-CH₃, -C(CH₃)-CH₃, acyl, preferably formyl, acetyl, propionyl, halogenated acyl, like halogenated acetyl, halogenated propionyl, more preferably -CO-CH₂Cl, -CO-CHClCH₃, -CO-CH₂-CH₂Cl
R₂ is selected from linear or branched, optionally chlorinated and/or hydroxylated C₁ to C₆ alkyl, preferably methyl, ethyl propyl, butyl, pentyl, hexyl, isopropyl, isobutyl, sec-butyl, tert-butyl, 1-ethylpropyl, 2-ethylpropyl, and methoxylated or ethoxylated C₁ to C₆ alkyl, preferably methoxymethyl, 1-methoxy-ethyl, 2-methoxy-ethyl, 1-methoxy-1-propyl, 2-methoxy-1-propyl, 1-methoxy-2-propyl, , 2-methoxy-2-propyl, 2-methoxy-3-propyl, 1-ethoxy-ethyl, 2-ethoxy-ethyl, 1-ethoxy-1-propyl, 2-ethoxy-1-propyl, 1-ethoxy-2-propyl, 2-ethoxy-2-propyl, 2-ethoxy-3-propyl, and N-(1H-pyrazol-1-ylmethyl,
R₆, R₇, R₈ and R₉ are independently selected from linear or branched, saturated or unsaturated, optionally hydroxy-substituted C₁ to C₆ alkyl, preferably -H, -CH₃, -CH₂-CH₃, -(CH₂)₂-CH₃, - C(CH₃)-CH₃, -Cl, -OH or -NO₂, Y is S, and n is 0.

In another preferred embodiment of the present invention, the use as defined above is claimed, wherein the compound (B) is selected from the list of compounds defined by the following formula (IIIa):

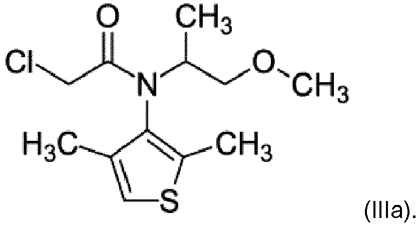

In another preferred embodiment of the present invention, the use as defined above is claimed, wherein the compound (B) has water-solubility of not higher than 50 g/L, preferably not higher than 40 g/L.

In another preferred embodiment of the present invention, the use as defined above is claimed, wherein the compound (B) has vapor pressure of less than 1 Pa at ambient temperature.

In another preferred embodiment of the present invention, the use as defined above is claimed, wherein the compound (B) is a liquid at standard ambient temperature of 25°C and standard ambient pressure of 100 kPa or an amorphous solid.

In another preferred embodiment of the present invention, the use as defined above is claimed, wherein the ratio of (A) clomazone to compound (B) in the formulation for agricultural end use is from 1:12 to 1:0.5, preferably 1:10 to 1:3, more preferably 1:7 to 1:5, based on the weight of the compounds.

In another preferred embodiment of the present invention, the use as defined above is claimed, wherein the relative amount of compound (B) in the formulation for agricultural end use is not higher than 90 % by weight, preferably not higher than 80 % by weight, more preferably not higher than 70 % by weight, and most preferably not higher than 60 % by weight, based on the total weight of the composition.

In another preferred embodiment of the present invention, the use as defined above is claimed, wherein the clomazone is a non-encapsulated clomazone, preferably not encapsulated by a polymer.

In another preferred embodiment of the present invention, the use as defined above is claimed, wherein the composition is formulated as an emulsion, an emulsifiable concentrate or a suspension.

In another preferred embodiment of the present invention, the use as defined above is claimed for reducing the volatility of clomazone in a herbicidal composition, wherein the reduction in volatility of clomazone in the herbicidal composition is at least 5 %, more preferably 10 %, even more preferably 20 %, even more preferably 30 %, and most preferably 40 %, relative to the volatility of clomazone in the herbicidal composition without compound (B).

### Brief Description of the Drawings

Fig. 1: Influence of the presence of dimethenamid in herbicidal compositions on the volatility of clomazone.

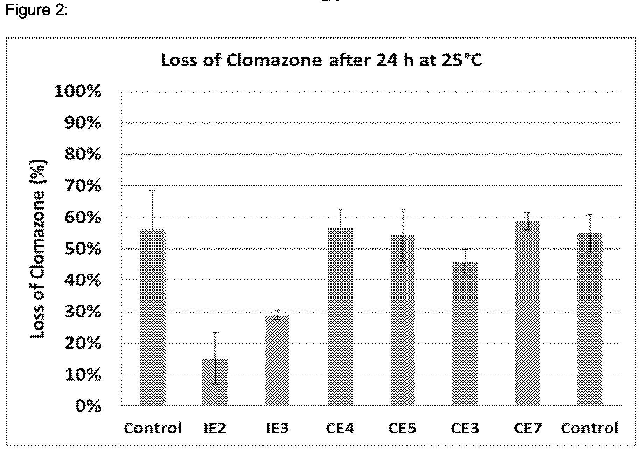

Fig. 2: Influence of the presence of dimethyl fatty acid amides in herbicidal compositions on the volatility of clomazone.

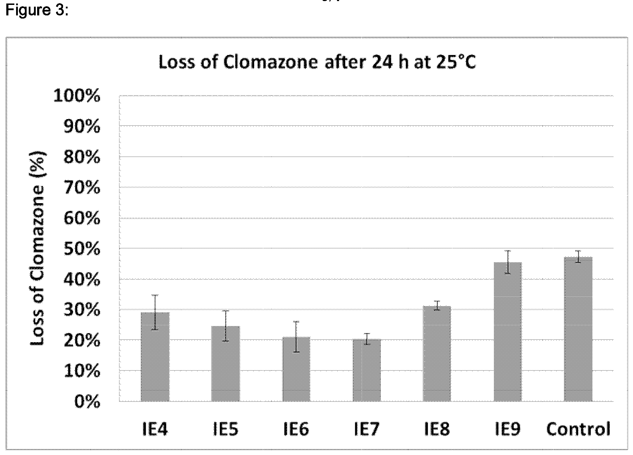

Fig. 3: Influence of the carbon chain length of dimethyl fatty acid amides in herbicidal compositions on the volatility of clomazone.

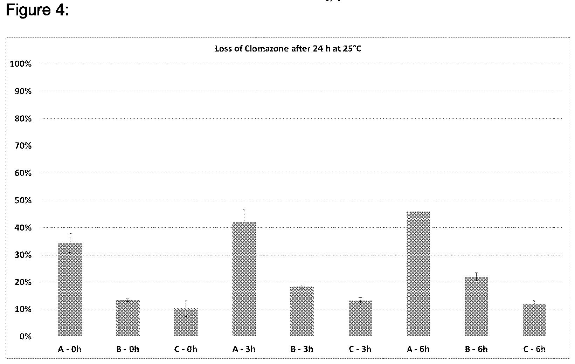

Fig. 4: Influence of standing time of herbicidal compositions on the volatility of clomazone.

### Detailed Description

The composition according to the present invention comprises a mixture of a compound (A) which is clomazone. Clomazone is a well-established herbicidal compound with the chemical structure 2-[(2-chlorophenyl)methyl]-4,4-dimethyl-3-isoxazolidinone.

Preferably, the clomazone component (A) is non-encapsulated, i.e. clomazone is not contained in an encapsulated form in the compositions according to the present invention. The volatility of clomazone in herbicidal compositions has been traditionally limited by encapsulating clomazone using a polymeric shell, e.g. a polyurethane or polyurea coating, in order to reduce the effective volatility of clomazone in the herbicidal composition. Such a coating, preferably polymeric coating, for the clomazone component (A) is preferably not present in the compositions according to the present invention.

The compound (B) according to formula (I) is defined by a compound according to the following formula (IIb): 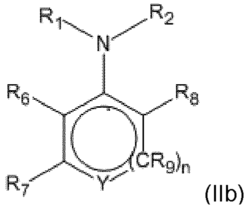
wherein R₁ is selected from -CH₃, -CH₂-CH₃, -(CH₂)₂-CH₃, -C(CH₃)-CH₃, acyl, like formyl, acetyl, propionyl, halogenated acyl, like halogenated acetyl, halogenated propionyl, preferably -CO-CH₂Cl, -CO-CHClCH₃, -CO-CH₂-CH₂Cl
R₂ is selected from linear or branched, optionally chlorinated and/or hydroxylated C₁ to C₆ alkyl, preferably methyl, ethyl, propyl, butyl, pentyl, hexyl, isopropyl, isobutyl, sec-butyl, tert-butyl, 1-ethylpropyl, 2-ethylpropyl, and methoxylated or ethoxylated C₁ to C₆ alkyl, preferably methoxymethyl, 1-methoxy-ethyl, 2-methoxy-ethyl, 1-methoxy-1-propyl, 2-methoxy-1-propyl, 1-methoxy-2-propyl, , 2-methoxy-2-propyl, 2-methoxy-3-propyl, 1-ethoxy-ethyl, 2-ethoxy-ethyl, 1-ethoxy-1-propyl, 2-ethoxy-1-propyl, 1-ethoxy-2-propyl, , 2-ethoxy-2-propyl, 2-ethoxy-3-propyl, and N-(1H-pyrazol-1-ylmethyl,
R₆, R₇, R₈ and R₉ are independently selected from linear or branched, saturated or unsaturated, optionally hydroxy-substituted C₁ to C₆ alkyl, preferably -H, -CH₃, -CH₂-CH₃, -(CH₂)₂-CH₃, - C(CH₃)-CH₃, -Cl, -OH or -NO₂, Y is S, and n is 0.

The compound (B) according to formula (IIb) can be present in the formulation for agricultural end use in amounts of from 20 to about 95 % per weight, preferably from 30 to 85 % by weight, more preferably from 40 to 75, even more preferably from 50 to 70 % by weight based on the total composition.

One very preferred compound (B) according to formula (IIb) is the known herbicide dimethenamid (*R,S*-2-Chloro-*N*-(2,4-dimethyl-3-thienyl)-*N*-(2-methoxy-1-methylethyl)acetamide which has the following formula (IIIa):

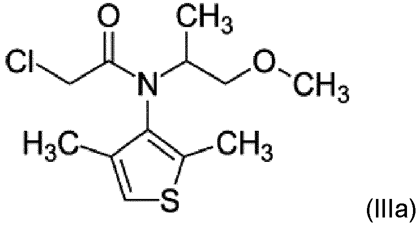

Dimethenamid can be used in the present invention as the mixture of the R-isomer and the S-isomer in a certain ratio, preferably as the racemate of the R-isomer and the *S-*isomer in equal amounts or, alternatively, dimethenamid can be used in the present invention as the *S*-isomer, commonly called dimethenamid P, which essentially is free of the R-isomer. Dimethenamid is a commercially available herbicide compound.

In an alternative embodiment of the present invention, 2-component mixtures, 3-component mixtures or the 4-component mixture of pendimethalin, dimethenamid, metolachlor and metazachlor can be used as component (B) in the compositions according to the present invention.

The compound (B) according to the present invention has only limited water solubility. The water solubility of the compound (B) is not higher than 80 g/L, preferably not higher than 50 g/L, and most preferably not higher than 40 g/l.

Some very preferred compounds (B) according to the present invention even are essentially not soluble in water at all having water solubility, which is even much lower than the values mentioned above. Accordingly, some selected, very preferred embodiments for compound (B) have very limited water solubility, or water miscibility, of not higher than 1 g/L, preferably not higher than 0.1 g/L, or even more preferably not higher than 0.01 g/L at room temperature.

One important characteristic of the compound (B) according to the present invention is the vapor pressure since the vapor pressure of a certain compound influences the effective volatility of the compound.

The compound (B) according to the present invention has a vapor pressure which is preferably not higher than 20 mPa at room temperature, preferably not higher than 10 mPa, more preferably not higher than 5 mPa, and most preferably not higher than 1 mPa.

The compound (B) according to the present invention is preferably in a liquid state at room temperature or, when being solid at room temperature, in amorphous form. The compound (B) can also be dissolved in an appropriate solvent. The compound (B) of the present invention is most preferably not in a crystalline state at room temperature.

In the herbicidal compositions according to the present invention, the ratio of (A) clomazone to compound (B) is from 1:12 to 1:0.5, preferably 1:10 to 1:3, more preferably 1:7 to 1:5, based on the weight of the compounds.

The relative amount of compound (B) in the composition according to the present invention the relative amount of compound (B) in the composition is not higher than 90 % by weight, preferably not higher than 80 % by weight, more preferably not higher than 70 % by weight, and most preferably not higher than 60 % by weight, based on the total weight of the composition. Especially preferred is a relative amount of compound (B) in the composition in the range of 20 to 70 % by weight, or most preferably 30 to 60 % by weight, based on the total weight of the composition.

The herbicidal compositions according to the present invention can contain, in addition to the herbicidal compound clomazone, additional pesticides. The additional pesticides can be selected from herbicides other than clomazone itself, fungicides, biological, insecticides, inoculants, nutrients, surfactants, wetting agents, and mixtures thereof.

Preferred herbicides in addition to clomazone to be used in the process according to the present invention include the following substances and mixtures thereof:
- acetamides: acetochlor, alachlor, butachlor, dimethachlor, flufenacet, mefenacet, napropamide, naproanilide, pethoxamid, pretilachlor, propachlor, thenylchlor;
- amino acid derivatives: bilanafos, glyphosate, glufosinate, sulfosate;
- aryloxyphenoxypropionates: clodinafop, cyhalofop-butyl, fenoxaprop, fluazifop, haloxyfop, metamifop, propaquizafop, quizalofop, quizalofop-P-tefuryl;
- bipyridyls: diquat, paraquat;
- (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;
- cyclohexanediones: butroxydim, clethodim, cycloxydim, profoxydim, sethoxydim, tepraloxydim, tralkoxydim;
- dinitroanilines: benfluralin, ethalfluralin, oryzalin, prodiamine, trifluralin;
- diphenyl ethers: acifluorfen, aclonifen, bifenox, diclofop, ethoxyfen, fomesafen, lactofen, oxyfluorfen;
- hydroxybenzonitriles: bomoxynil, dichlobenil, ioxynil;
- imidazolinones: imazamethabenz, imazamox, imazapic, imazapyr, imazaquin, imazethapyr;
- phenoxy acetic acids: clomeprop, 2,4-dichlorophenoxyacetic acid (2,4-D), 2,4-DB, dichlorprop, MCPA, MCPA-thioethyl, MCPB, Mecoprop;
- pyrazines: chloridazon, flufenpyr-ethyl, fluthiacet, norflurazon, pyridate; pyridines: aminopyralid, clopyralid, diflufenican, dithiopyr, fluridone, fluroxypyr, picloram, picolinafen, thiazopyr;
- sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6-dimethoxy-pyrimidin-2-yl)urea;
- triazines: ametryn, atrazine, cyanazine, dimethametryn, ethiozin, hexazinone, metamitron, metribuzin, prometryn, simazine, terbuthylazine, terbutryn, triaziflam;
- ureas: chlorotoluron, daimuron, diuron, fluometuron, isoproturon, linuron, methabenzthiazuron, tebuthiuron;
- other acetolactate synthase inhibitors: bispyribac-sodium, cloransulam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;
- others: amicarbazone, aminotriazole, anilofos, beflubutamid, benazolin, bencarbazone, benfluresate, benzofenap, bentazone, benzobicyclon, bicyclopyrone, bromacil, bromobutide, butafenacil, butamifos, cafenstrole, carfentrazone, cinidon-ethyl, chlorthal,, cumyluron, cyprosulfamide, dicamba, difenzoquat, diflufenzopyr, Drechslera monoceras, endothal, ethofumesate, etobenzanid, fenoxasulfone, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac , mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4- fluoro-5-(3-methyl-2,6-dioxo-4-trifluoromethyl-3,6-dihydro-2H-pyrimidin-1-yl)- phenoxy]-pyridin-2-yloxy)-acetic acid ethyl ester, 6-amino-5-chloro-2-cyclopropyl- pyrimidine-4-carboxylic acid methyl ester, 6-chloro-3-(2-cyclopropyl-6-methyl- phenoxy)-pyridazin-4-ol, 4-amino-3-chloro-6-(4-chloro-phenyl)-5-fluoro-pyridine-2- carboxylic acid, 4-amino-3-chloro-6-(4-chloro-2-fluoro-3-methoxy-phenyl)-pyridine- 2-carboxylic acid methyl ester, and 4-amino-3-chloro-6-(4-chloro-3-dimethylamino- 2-fluoro-phenyl)-pyridine-2-carboxylic acid methyl ester.

The herbicide is present in the composition for agricultural end use in an amount of 0.0001 to 0.1 % by weight, preferably 0.0005 to 0.05 % by weight, and even more preferably 0.001 to 0.01 % by weight based on the total composition.

Preferred insecticides to be used in the process according to the present invention include the following substances and mixtures thereof:
- organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
- carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
- pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin;
- insect growth regulators: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;
- nicotinic receptor agonists/antagonists compounds: clothianidin, dinotefuran, flupyradifurone, imidacloprid, thiamethoxam, nitenpyram, acetamiprid, thiacloprid, 1-2-chloro-thiazol-5-ylmethyl)-2-nitrimino-3,5-dimethyl-[1,3,5]triazinane;
- GABA antagonist compounds: endosulfan, ethiprole, fipronil, vaniliprole, pyrafluprole, pyriprole, 5-amino-1-(2,6-dichloro-4-methyl-phenyl)-4-sulfinamoyl-1H-pyrazole-3-carbothioic acid amide;
- macrocyclic lactone insecticides: abamectin, emamectin, milbemectin, lepimectin, spinosad, spinetoram;
- mitochondrial electron transport inhibitor (METI) I acaricides: fenazaquin, pyridaben, tebufenpyrad, tolfenpyrad, flufenerim;
- METI II and III compounds: acequinocyl, fluacyprim, hydramethylnon;
- Uncouplers: chlorfenapyr;
- oxidative phosphorylation inhibitors: cyhexatin, diafenthiuron, fenbutatin oxide, propargite;
- moulting disruptor compounds: cryomazine;
- mixed function oxidase inhibitors: piperonyl butoxide;
- sodium channel blockers: indoxacarb, metaflumizone;
- ryanodine receptor inhibitors: chlorantraniliprole, cyantraniliprole, flubendiamide, N-[4,6-dichloro-2-[(diethyl-lambda-4-sulfanylidene)carbamoyl]-phenyl]-2-(3-chloro-2-pyridyl)-5-(trifluoromethyl)pyrazole-3-carboxamide; N-[4-chloro-2-[(diethyl-lambda-4-sulfanylidene)carbamoyl]-6-methyl-phenyl]-2-(3-chloro-2-pyridyl)-5-(trifluoromethyl)pyrazole-3-carboxamide; N-[4-chloro-2-[(di-2-propyl-lambda-4-sulfanyli-dene)carbamoyl]-6-methyl-phenyl]-2-(3-chloro-2-pyridyl)-5-(trifluoromethyl)pyrazole-3-carboxamide; N-[4,6-dichloro-2-[(di-2-propyl-lambda-4-sulfanylidene)carbamoyl]-phenyl]-2-(3-chloro-2-pyridyl)-5-(trifluoromethyl)pyrazole-3-carboxamide; N-[4,6-dichloro-2-[(diethyl-lambda-4-sulfanylidene)carbamoyl]-phenyl]-2-(3-chloro-2-pyridyl)-5-(difluoromethyl)pyrazole-3-carboxamide; N-[4,6-dibromo-2-[(di-2-propyl-lambda-4-sul-fanylidene)carbamoyl]-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-cyanophenyl]-2-(3-chloro-2-pyridyl)-5-(trifluoromethyl)pyrazole-3-carboxamide; N-[4,6-dibromo-2-[(diethyl-lambda-4-sulfanylidene)carbamoyl]-phenyl]-2-(3-chloro-2-pyridyl)-5-(trifluoromethyl)pyrazole-3-carboxamide; cyazypyr, rynaxapyr;
- others: benclothiaz, bifenazate, artap, flonicamid, pyridalyl, pymetrozine, sulfur, thiocyclam, cyenopyrafen, flupyrazofos, cyflumetofen, amidoflumet, imicyafos, bistrifluron, pyrifluquinazon and 1,1'-[(3S,4R,4aR,6S,6aS,12R,12aS,12bS)-4-[[(2-cyclopropylacetyl)oxy]methyl]-1,3,4,4a,5,6,6a, 12,12a, 12b-decahydro-12-hydroxy-4,6a, 12b-trimethyl-11-oxo-9-(3-pyridinyl)-2H,11H-naphtho[2,1-b]pyrano[3,4-e]pyran-3,6-diyl] cyclopropaneacetic acid ester

Even more preferred insecticides to be used in the process according to the present invention include the following substances and mixtures thereof:
- carbamates: methiocarb, thiodicarb;
- pyrethroids: bifenthrin, cypermethrin, alpha-cypermethrin, beta-cypermethrin, zeta-cypermethrin, deltamethrin, tefluthrin;
- nicotinic receptor agonists/antagonists compounds: clothianidin, dinotefuran, imidacloprid, thiamethoxam, acetamiprid, thiacloprid;
- GABA antagonist compounds: fipronil;
- ryanodine receptor inhibitors: cyazypyr, rynaxapyr

The most preferred insecticides to be used in the process according to the present invention include the following substances and mixtures thereof:
- carbamates: methiocarb, thiodicarb;
- pyrethroids: bifenthrin, cypermethrin, alpha-cypermethrin, beta-cypermethrin, zeta-cypermethrin, deltamethrin, tefluthrin;
- nicotinic receptor agonists/antagonists compounds: clothianidin, dinotefuran, imidacloprid, thiamethoxam, acetamiprid, thiacloprid;
- GABA antagonist compounds: fipronil;
- ryanodine receptor inhibitors: cyazypyr, rynaxapyr.

The insecticide is present in the compositions for agricultural end use in an amount of 0.0001 to 0.1% by weight, preferably 0.0005 to 0.01 % by weight, and even more preferably 0.001 to 0.006 % by weight based on the total composition.

Preferred fungicides to be used in the process according to the present invention include the following substances and mixtures thereof:
A) Respiration inhibitors:
   - inhibitors of complex III at Qₒ site (e. g. strobilurins): azoxystrobin, coumethoxystrobin, coumoxystrobin, dimoxystrobin, enestroburin, fenaminstrobin, fenoxy-strobin/flufenoxystrobin, fluoxastrobin, kresoxim-methyl, mandestrobine, meto-minostrobin, orysastrobin, picoxystrobin, pyraclostrobin, pyrametostrobin, pyraoxystrobin, trifloxystrobin and 2-(2-(3-(2,6-dichlorophenyl)-1-methyl-allylidene-aminooxymethyl)-phenyl)-2-methoxyimino-N-methyl-acetamide, pyribencarb, triclopyricarb/chlorodincarb, famoxadone, fenamidone;
   - inhibitors of complex III at Qᵢ site: cyazofamid, amisulbrom, [(3S,6S,7R,8R)-8-benzyl-3-[(3-acetoxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(acetoxymethoxy)-4-methoxy-pyridine-2-carbonyl]amino]-6-methyl-4,9-dioxo-1,5-dioxonan-7-yl] 2-methylpropanoate, [(3S,6S,7R,8R)-8-benzyl-3-[(3-isobutoxycarbonyloxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(1,3-benzodioxol-5-ylmethoxy)-4-methoxy-pyridine-2-carbonyl]amino]-6-methyl-4,9-dioxo-1,5-dioxonan-7-yl] 2-methylpropanoate; (3S,6S,7R,8R)-3-[[(3-hydroxy-4-methoxy-2-pyridinyl)carbonyl]amino]-6-methyl-4,9-dioxo-8-(phenylmethyl)-1,5-dioxonan-7-yl 2-methylpropanoate
   - inhibitors of complex II (e. g. carboxamides): benodanil, benzovindiflupyr, bixafen, boscalid, carboxin, fenfuram, fluopyram, flutolanil, fluxapyroxad, furametpyr, isofetamid, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1H-pyrazole-4-carboxamide, N-(2-(1,3,3-trimethyl-butyl)-phenyl)-1,3-dimethyl-5-fluoro-1H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)pyrazole-4-carboxamide, 1,3,5-trimethyl-N-(1,1,3-trimethylindan-4-yl)pyrazole-4-carboxamide, N-(7-fluoro-1,1,3-trimethyl-indan-4-yl)-1,3-dimethyl-pyrazole-4-carboxamide, N-[2-(2,4-dichlorophenyl)-2-methoxy-1-methyl-ethyl]-3-(difluoromethyl)-1-methyl-pyrazole-4-carboxamide;
   - other respiration inhibitors (e. g. complex I, uncouplers): diflumetorim, (5,8-difluoro-quinazolin-4-yl)-{2-[2-fluoro-4-(4-trifluoromethylpyridin-2-yloxy)-phenyl]-ethyl}-amine; nitrophenyl derivates: binapacryl, dinobuton, dinocap, fluazinam; ferimzone; organometal compounds: fentin salts, such as fentin-acetate, fentin chloride or fentin hydroxide; ametoctradin; and silthiofam;
B) Sterol biosynthesis inhibitors (SBI fungicides):
   - C14 demethylase inhibitors (DMI fungicides): triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole, 1-[*rel*-(2*S*;3*R*)-3-(2-chlorophenyl)-2-(2,4-difluorophenyl)-oxiranylmethyl]-5-thiocyanato-1H-[1,2,4]triazole, 2-[*rel*-(2*S*;3*R*)-3-(2-chlorophenyl)-2-(2,4-difluorophenyl)-oxiranyl-methyl]-2H-[1,2,4]triazole-3-thiol, 2-[2-chloro-4-(4-chlorophenoxy)phenyl]-1-(1,2,4-triazol-1-yl)pentan-2-ol, 1-[4-(4-chlorophenoxy)-2-(trifluoromethyl)phenyl]-1-cyclopropyl-2-(1,2,4-triazol-1-yl)ethanol, 2-[4-(4-chlorophenoxy)-2-(trifluoromethyl)phenyl]-1-(1,2,4-triazol-1-yl)butan-2-ol, 2-[2-chloro-4-(4-chlorophenoxy)phenyl]-1-(1,2,4-triazol-1-yl)butan-2-ol, 2-[4-(4-chlorophenoxy)-2-(trifluoromethyl)phenyl]-3-methyl-1-(1,2,4-triazol-1-yl)butan-2-ol, 2-[4-(4-chlorophenoxy)-2-(trifluoromethyl)phenyl]-1-(1,2,4-triazol-1-yl)propan-2-ol, 2-[2-chloro-4-(4-chlorophenoxy)phenyl]-3-methyl-1-(1,2,4-triazol-1-yl)butan-2-ol, 2-[4-(4-chlorophenoxy)-2-(trifluoromethyl)phenyl]-1-(1,2,4-triazol-1-yl)pentan-2-ol, 2-[4-(4-fluorophenoxy)-2-(trifluoromethyl)phenyl]-1-(1,2,4-triazol-1-yl)propan-2-ol, 2-[2-chloro-4-(4-chlorophenoxy)phenyl]-1-(1,2,4-triazol-1-yl)pent-3-yn-2-ol; imidazoles: imazalil, pefurazoate, prochloraz, triflumizol; pyrimidines, pyridines and piperazines: fenarimol, nuarimol, pyrifenox, triforine, [3-(4-chloro-2-fluoro-phenyl)-5-(2,4-difluorophenyl)isoxazol-4-yl]-(3-pyridyl)methanol;
   - Delta14-reductase inhibitors: aldimorph, dodemorph, dodemorph-acetate, fenpropimorph, tridemorph, fenpropidin, piperalin, spiroxamine;
   - Inhibitors of 3-keto reductase: fenhexamid;
C) Nucleic acid synthesis inhibitors:
   - phenylamides or acyl amino acid fungicides: benalaxyl, benalaxyl-M, kiralaxyl, metalaxyl, metalaxyl-M (mefenoxam), ofurace, oxadixyl;
   - others: hymexazole, octhilinone, oxolinic acid, bupirimate, 5-fluorocytosine, 5-fluoro-2-(p-tolylmethoxy)pyrimidin-4-amine, 5-fluoro-2-(4-fluorophenylmethoxy)pyrimidin-4-amine;
D) Inhibitors of cell division and cytoskeleton:
   - tubulin inhibitors, such as benzimidazoles, thiophanates: benomyl, carbendazim, fuberidazole, thiabendazole, thiophanate-methyl; triazolopyrimidines: 5-chloro-7-(4-methylpiperidin-1-yl)-6-(2,4,6-trifluorophenyl)-[1,2,4]triazolo[1,5-a]pyrimidine
   - other cell division inhibitors: diethofencarb, ethaboxam, pencycuron, fluopicolide, zoxamide, metrafenone, pyriofenone;
E) Inhibitors of amino acid and protein synthesis:
   - methionine synthesis inhibitors (anilino-pyrimidines): cyprodinil, mepanipyrim, pyrimethanil;
   - protein synthesis inhibitors: blasticidin-S, kasugamycin, kasugamycin hydrochloride-hydrate, mildiomycin, streptomycin, oxytetracyclin, polyoxine, validamycin A;
F) Signal transduction inhibitors:
   - MAP / histidine kinase inhibitors: fluoroimid, iprodione, procymidone, vinclozolin, fenpiclonil, fludioxonil;
   - G protein inhibitors: quinoxyfen;
G) Lipid and membrane synthesis inhibitors:
   - Phospholipid biosynthesis inhibitors: edifenphos, iprobenfos, pyrazophos, isoprothiolane;
   - lipid peroxidation: dicloran, quintozene, tecnazene, tolclofos-methyl, biphenyl, chloroneb, etridiazole;
   - phospholipid biosynthesis and cell wall deposition: dimethomorph, flumorph, mandipropamid, pyrimorph, benthiavalicarb, iprovalicarb, valifenalate and N-(1-(1-(4-cyano-phenyl)ethanesulfonyl)-but-2-yl) carbamic acid-(4-fluorophenyl) ester;
   - compounds affecting cell membrane permeability and fatty acides: propamocarb, propamocarb-hydrochlorid
   - fatty acid amide hydrolase inhibitors: oxathiapiprolin, 2-{3-[2-(1-{[3,5-bis(difluoromethyl-1H-pyrazol-1-yl]acetyl}piperidin-4-yl)-1,3-thiazol-4-yl]-4,5-dihydro-1,2-oxazol-5-yl}phenyl methanesulfonate, 2-{3-[2-(1-{[3,5-bis(difluoromethyl)-1H-pyrazol-1-yl]acetyl}piperidin-4-yl) 1,3-thiazol-4-yl]-4,5-dihydro-1,2-oxazol-5-yl}-3-chlorophenyl methanesulfonate;
H) Inhibitors with Multi Site Action:
   - inorganic active substances: Bordeaux mixture, copper acetate, copper hydroxide, copper oxychloride, basic copper sulfate, sulfur;
   - thio- and dithiocarbamates: ferbam, mancozeb, maneb, metam, metiram, propineb, thiram, zineb, ziram;
   - organochlorine compounds (e. g. phthalimides, sulfamides, chloronitriles): anilazine, chlorothalonil, captafol, captan, folpet, dichlofluanid, dichlorophen, hexachlorobenzene, pentachlorphenole and its salts, phthalide, tolylfluanid, N-(4-chloro-2-nitro-phenyl)-N-ethyl-4-methyl-benzenesulfonamide;
   - guanidines and others: guanidine, dodine, dodine free base, guazatine, guazatine-acetate, iminoctadine, iminoctadine-triacetate, iminoctadine-tris(albesilate), dithianon, 2,6-dimethyl-1H,5H-[1,4]dithiino[2,3-c:5,6-c']dipyrrole-1,3,5,7(2H,6H)-tetraone;
I) Cell wall synthesis inhibitors:
   - inhibitors of glucan synthesis: validamycin, polyoxin B; melanin synthesis inhibitors: pyroquilon, tricyclazole, carpropamid, dicyclomet, fenoxanil;
J) Plant defence inducers:
   - acibenzolar-S-methyl, probenazole, isotianil, tiadinil, prohexadione-calcium; phosphonates: fosetyl, fosetyl-aluminum, phosphorous acid and its salts;
K) Unknown mode of action:
   - bronopol, chinomethionat, cyflufenamid, cymoxanil, dazomet, debacarb, diclomezine, difenzoquat, difenzoquat-methylsulfate, diphenylamin, fenpyrazamine, flumetover, flusulfamide, flutianil, methasulfocarb, nitrapyrin, nitrothal-isopropyl, oxathiapiprolin, picarbutrazox, tolprocarb, 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, 2- [3,5-bis(difluoromethyl)-1H-pyrazol-1-yl]-1-[4-(4-{5-[2-chloro-6-(prop-2-yn-1-yl-oxy)phenyl]-4,5-dihydro-1,2-oxazol-3-yl}-1,3-thiazol-2-yl)piperidin-1-yl]ethanone, oxin-copper, proquinazid, tebufloquin, tecloftalam, triazoxide, 2-butoxy-6-iodo-3-propylchromen-4-one, N-(cyclopropylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethylsilanyl-propoxy)-phenyl)-N-ethyl-N-methyl formamidine, N'-(5-difluoromethyl-2-methyl-4-(3-trimethylsilanyl-propoxy)-phenyl)-N-ethyl-N-methyl formamidine, methoxy-acetic acid 6-tert-butyl-8-fluoro-2,3-dimethyl-quinolin-4-yl ester, 3-[5-(4-methylphenyl)-2,3-dimethyl-isoxazolidin-3-yl]-pyridine, 3-[5-(4-chloro-phenyl)-2,3-dimethyl-isoxazolidin-3-yl]-pyridine (pyrisoxazole), N-(6-methoxy-pyridin-3-yl) cyclopropanecarboxylic acid amide, 5-chloro-1-(4,6-di-methoxy-pyrimidin-2-yl)-2-methyl-1H-benzoimidazole, 2-(4-chloro-phenyl)-N-[4-(3,4-dimethoxy-phenyl)-isoxazol-5-yl]-2-prop-2-ynyloxy-acetamide, ethyl (Z)-3-amino-2-cyano-3-phenyl-prop-2-enoate, pentyl N-[6-[[(Z)-[(1-methyltetrazol-5-yl)-phenyl-methylene]amino]oxymethyl]-2-pyridyl]carbamate, 2-[2-[(7,8-difluoro-2-methyl-3-quinolyl)oxy]-6-fluoro-phenyl]propan-2-ol, 2-[2-fluoro-6-[(8-fluoro-2-methyl-3-quinolyl)oxy]phenyl]propan-2-ol, 3-(5-fluoro-3,3,4,4-tetramethyl-3,4-dihydroisoquinolin-1-yl)quinoline, 3-(4,4-difluoro-3,3-dimethyl-3,4-dihydroisoquinolin-1-yl)quinoline, 3-(4,4,5-trifluoro-3,3-dimethyl-3,4-dihydroisoquinolin-1-yl)quinolone, 9-fluoro-2,2-dimethyl-5-(3-quinolyl)-3H-1,4-benzoxazepine;

Even more preferred fungicides to be used in the process according to the present invention include the following substances and mixtures thereof:
A) Respiration inhibitors:
   - Inhibitors of complex III at Qₒ site (e. g. strobilurins): azoxystrobin, picoxystrobin, pyraclostrobin, trifloxystrobin ;
   - inhibitors of complex III at Qᵢ site: cyazofamid;
   - inhibitors of complex II (e. g. carboxamides): boscalid, fluopyram, fluxapyroxad, penflufen, penthiopyrad, sedaxane;
   - other respiration inhibitors: fluazinam;
B) Sterol biosynthesis inhibitors (SBI fungicides):
   - C14 demethylase inhibitors (DMI fungicides): cyproconazole, difenoconazole, flutriafol, ipconazole, prothioconazole, tebuconazole, triticonazole, prochloraz;
   - Delta14-reductase inhibitors: fenpropimorph;
C) Nucleic acid synthesis inhibitors:
   - phenylamides or acyl amino acid fungicides: metalaxyl, metalaxyl-M (mefenoxam), ofurace, oxadixyl;
   - 5-fluoro-2-(4-fluorophenylmethoxy)pyrimidin-4-amine;
D) Inhibitors of cell division and cytoskeleton:
   - tubulin inhibitors, such as benzimidazoles, thiophanates: carbendazim, thiabendazole;
   - other cell division inhibitors: diethofencarb, ethaboxam, fluopicolide, zoxamide, metrafenone;
F) Signal transduction inhibitors:
   - MAP / histidine kinase inhibitors: fludioxonil;
   - G protein inhibitors: quinoxyfen;
G) Lipid and membrane synthesis inhibitors:
   - phospholipid biosynthesis and cell wall deposition: dimethomorph, mandipropamid;
   - fatty acid amide hydrolase inhibitors: oxathiapiprolin;
H) Inhibitors with Multi Site Action:
   - thio- and dithiocarbamates:, mancozeb, maneb, metam, metiram, thiram, ziram;
   - organochlorine compounds (e. g. phthalimides, sulfamides, chloronitriles): anilazine, chlorothalonil;
K) Unknown mode of action:
   - cyflufenamid, dazomet, nitrapyrin, oxathiapiprolin;

The most preferred fungicides to be used in the process according to the present invention include the following substances and mixtures thereof:
A) Respiration inhibitors:
   - Inhibitors of complex III at Qₒ site (e. g. strobilurins): azoxystrobin, pyraclostrobin, trifloxystrobin;
   - inhibitors of complex II (e. g. carboxamides): boscalid, fluopyram, fluxapyroxad, penflufen, penthiopyrad, sedaxane;
B) Sterol biosynthesis inhibitors (SBI fungicides):
   - C14 demethylase inhibitors (DMI fungicides): difenoconazole, ipconazole, prothioconazole, triticonazole;
C) Nucleic acid synthesis inhibitors:
   - phenylamides or acyl amino acid fungicides: metalaxyl, metalaxyl-M (mefenoxam);
D) Inhibitors of cell division and cytoskeleton:
   - tubulin inhibitors, such as thiabendazole;
   - other cell division inhibitors: ethaboxam;
G) Lipid and membrane synthesis inhibitors:
   - fatty acid amide hydrolase inhibitors: oxathiapiprolin;
H) Inhibitors with Multi Site Action:
   - thio- and dithiocarbamates:, mancozeb;
   - organochlorine compounds (e. g. phthalimides, sulfamides, chloronitriles): chlorothalonil;
K) Unknown mode of action:
   - nitrapyrin, oxathiapiprolin.

The fungicide is present in the formulation for agricultural end use, in an amount of 0.0001 to 0.1 % by weight, preferably 0.0005 to 0.05 % by weight, and even more preferably 0.001 to 0.01 % by weight based on the total weight of the formulation.

Preferred inoculants or inoculant compositions according to the present invention comprise microorganisms which have a beneficial effect on plants, preferably the growth of plants. Preferred inoculants to be used in the process according to the present invention include compositions comprising the following microorganisms and combinations thereof:

Bacteria of the genera *Rhizobium, Bradyrhizobium, Sinorhizobium, Mesorhizobium, Pseudomonas, Serratia, Bacillus, Paenibacillus, Pasteuria, Azotobacter, Enterobacter, Azospirillum, Methylobacterium, Cyanobacteria* (blue-green algae), and mycorrhizal fungae.

Preferred biologicals to be used in the process according to the present invention include the following substances and mixtures thereof:
aluminium silicate (Screen^{™} Duo from Certis LLC, USA),
Agrobacterium radiobacter K1026 (e. g. NoGall^{®} from BASF Agricultural Specialties Pty Ltd, Australia), A. radiobacter K84 (Nature 280, 697-699, 1979; e. g. GallTroll^{®} from AG Biochem, Inc., C, USA), Ampelomyces quisqualis M-10 (e. g. AQ 10^{®} from Intrachem Bio GmbH & Co. KG, Germany), Ascophyllum nodosum (Norwegian kelp, Brown kelp) extract or filtrate (e. g. ORKA GOLD from BASF Agricultural Specialities (Pty) Ltd., South Africa; or Goemar^{®} from Laboratoires Goemar, France), Aspergillus flavus NRRL 21882 isolated from a peanut in Georgia in 1991 by USDA, National Peanut Research Laboratory (e. g. in Afla-Guard^{®} from Syngenta, CH), mixtures of Aureobasidium pullulans DSM 14940 and DSM 14941 (e. g. blastospores in BlossomProtect^{®} from bio-ferm GmbH, Germany),
Azospirillum amazonense BR 11140 (SpY2T) (Proc. 9th Int. and 1st Latin American PGPR meeting, Quimara, Medellin, Colombia 2012, p. 60, ISBN 978-958-46-0908-3), A. brasilense AZ39 (Eur. J. Soil Biol 45(1), 28-35, 2009), A. brasilense XOH (e. g. AZOS from Xtreme Garde¬ning, USA or RTI Reforestation Technologies International; USA), A. brasilense BR 11002 (Proc. 9th Int. and 1st Latin American PGPR meeting, Quimara, Medellin, Colombia 2012, p. 60, ISBN 978-958-46-0908-3), A. brasilense BR 11005 (SP245; e. g. in GELFIX Gramíneas from BASF Agricultural Specialties Ltd., Brazil), A. brasilense strains Ab-V5 and Ab-V6 (e. g. in AzoMax from Novozymes BioAg Produtos papra Agricultura Ltda., Quattro Barras, Brazil or SimbioseMaíz^{®} from Simbiose-Agro, Cruz Alta, RS, Brazil; Plant Soil 331, 413-425, 2010), A. lipoferum BR 11646 (Sp31) (Proc. 9th Int. and 1st Latin American PGPR meeting, Quimara, Medellin, Colombia 2012, p. 60),
Bacillus amyloliquefaciens FZB42 (e. g. in RhizoVital^{®} 42 from AbiTEP GmbH,
Berlin, Germany), B. amyloliquefaciens IN937a (J. Microbiol. Biotechnol. 17(2), 280-286, 2007; e. g. in BioYield^{®} from Gustafson LLC, TX, USA), B. amyloliquefaciens IT-45 (CNCM I 3800) (e. g. Rhizocell C from ITHEC, France), B. amyloliquefaciens TJ1000 (also called 1BE; ATCC BAA-390; e.g. QuickRoots^{™} from TJ Technologies, Watertown, SD, USA; CA 2471555 A1), B. amylolique¬faciens ssp. plantarum MBI600 (NRRL B-50595, deposited at USDA) (e. g. Integral^{®}, Subtilex^{®} NG from BASF Corp., USA), B. cereus CNCM I-1562 (US 6,406,690), B. firmus CNCM I-1582 (WO 2009/126473, WO 2009/124707, US 6,406,690; Votivo^{®} from Bayer Crop Science LP, USA),
B. pumilus GB34 (ATCC 700814; e. g. in YieldShield^{®} from Gustafson LLC, TX,
USA),
Bacillus pumilus KFP9F (NRRL B-50754) (e. g. in BAC-UP or FUSION-P from BASF Agricultural Specialities (Pty) Ltd., South Africa), B. pumilus QST 2808 (NRRL B 30087) (e. g. Sonata^{®} and Ballad^{®} Plus from AgraQuest Inc., USA),
B. subtilis CX-9060 (Federeal Register 77(7), 1633-1637; Certis U.S.A., L.L.C.), B. subtilis GB03 (e. g. Kodiak^{®} or BioYield^{®} from Gustafson, Inc., USA; or Companion^{®} from Growth Products, Ltd., White Plains, NY 10603, USA), B. subtilis GB07 (Epic^{®} from Gustafson, Inc., USA), B. subtilis QST-713 (NRRL B 21661 in Rhapsody^{®}, Serenade^{®} MAX and Serenade^{®} ASO from AgraQuest Inc., USA), B. subtilis var. amyloliquefaciens FZB24 (e. g. Taegro^{®} from Novozyme Biologicals, Inc., USA), B. subtilis var. amyloliquefaciens D747 (FERM BP-8234; KR 100903253; e. g. Double Nickel^{™} 55 WDG or Double Nickel^{™} LC from Certis
LLC, USA),
B. thuringiensis ssp. aizawai ABTS-1857 (e. g. in XenTari^{®} from BioFa AG, Münsingen, Germany), B. t. ssp. aizawai SAN 401 I, ABG-6305 and ABG-6346, Bacillus t. ssp. israelensis AM65-52 (e. g. in VectoBac^{®} from Valent BioSciences, IL, USA), Bacillus thuringiensis ssp. kurstaki SB4 (NRRL B-50753; e. g. Beta Pro^{®} from BASF Agricultural Specialities (Pty) Ltd., South Africa), B. t. ssp. kurstaki ABTS-351 identical to HD-1 (ATCC SD-1275; e. g. in Dipel^{®} DF from Valent BioSciences, IL, USA), B. t. ssp. kurstaki EG 2348 (e. g. in Lepinox^{®} or Rapax^{®} from CBC (Europe) S.r.l., Italy), B. t. ssp. tenebrionis DSM 2803 (EP 0 585 215 B1; identical to NRRL B-15939; Mycogen Corp.), B. t. ssp. tenebrionis NB-125 (DSM 5526; EP 0 585 215 B1; also referred to as SAN 418 I or ABG-6479; former production strain of Novo-Nordisk), B. t. ssp. tenebrionis NB-176 (or NB-176-1; a gamma-irridated, induced high-yielding mutant of strain NB-125; DSM 5480; EP 585 215 B1; Novodor^{®} from Valent BioSciences, Switzerland), Beauveria bassiana ATCC 74040 (e. g. in Naturalis^{®} from CBC (Europe) S.r.l., Italy), B. bassiana DSM 12256 (US 200020031495; e. g. BioExpert^{®} SC from Live Sytems Technology S.A., Colombia), B. bassiana GHA (BotaniGard^{®} 22WGP from Laverlam Int. Corp., USA), B. bassiana PPRI 5339 (ARSEF number 5339 in the USDA ARS collection of entomopathogenic fungal cultures; NRRL 50757) (e. g. BroadBand^{®} from BASF Agricultural Specialities (Pty) Ltd., South Africa), B. brongniartii (e. g. in Melocont^{®} from Agrifutur, Agrianello, Italy, for control of cockchafer; J. Appl. Microbiol. 100(5),1063-72, 2006),
Bradyrhizobium sp. (e. g. Vault^{®} from BASF Corp., USA), B. japonicum (e. g. VAULT^{®} from BASF Corp., USA),
Burkholderia sp. A396 (NRRL B-50319; WO 2013/032693; Marrone Bio Innovations, Inc., USA), Candida oleophila I-182 (NRRL Y-18846; e. g. Aspire^{®} from Ecogen Inc., USA,
Phytoparasitica 23(3), 231-234, 1995), C. oleophila strain O (NRRL Y-2317; Biological Control 51, 403-408, 2009), Candida saitoana (e. g. Biocure^{®} (in mixture with lysozyme) and BioCoat^{®} from Micro Flo Company, USA (BASF SE) and Arysta), chitosan (e. g. Armour-Zen^{®} from BotriZen Ltd., NZ), Clonostachys rosea f. catenulata, also named Gliocladium catenulatum (e. g. isolate J 1446: Prestop^{®} from Verdera Oy, Finland), Chromobacterium subtsugae PRAA4-1 isolated from soil under an eastern hemlock (Tsuga canadensis) in the Catoctin Mountain region of central Maryland (e. g. in GRANDEVO from Marrone Bio Innovations, USA),
Coniothyrium minitans CON/M/91-08 (DSM 9660; e. g. Contans^{®} WG, Intercept^{®} WG from Prophyta Biologischer Pflanzenschutz GmbH, Germany; WO 1996/021358),
Cryphonectria parasitica (e. g. product Endothia parasitica from CNICM, France), Cryptococcus albidus (e. g. YIELD PLUS^{®} from Anchor Bio-Technologies, South Africa), Cryptophlebia leucotreta granulovirus (CrleGV) (e. g. in CRYPTEX from Adermatt Biocontrol, Switzerland), Cydia pomonella granulovirus (CpGV) V03 (DSM GV-0006; e. g. in MADEX Max from Andermatt Biocontrol, Switzerland), CpGV V22 (DSM GV-0014; e. g. in MADEX Twin from Adermatt Biocontrol, Switzerland), Delftia acidovorans RAY209 (ATCC PTA-4249; WO 2003/57861; e. g. in BIOBOOST from Brett Young, Winnipeg, Canada), Dilophosphora alopecuri (Twist Fungus from BASF Agricultural Specialties Pty Ltd, Australia), Ecklonia maxima (kelp) extract (e. g. KELPAK SL from Kelp Products Ltd, South Africa), Flavobacterium sp. H492 (ATCC B-505584, WO 2013/138398), formononetin (e. g. in MYCONATE from Plant Health Care plc, U.K.), Fusarium oxysporum (e. g. BIOFOX^{®} from S.I.A.P.A., Italy, FUSACLEAN^{®} from Natural Plant Protection, France), Glomus intraradices (e. g. MYC 4000 from ITHEC, France), Glomus intraradices RTI-801 (e. g. MYKOS from Xtreme Gardening, USA or RTI Reforestation Technologies International; USA), grapefruit seeds and pulp extract (e. g. BC-1000 from Chemie S.A., Chile), harpin (alpha-beta) protein (e. g. MESSENGER or HARP-N Tek from Plant Health Care plc, U.K.; Science 257, 1-132, 1992), Helicoverpa armigera nucleopolyhedrovirus (HearNPV) (e.g. in HELICOVEXfrom Adermatt Biocontrol, Switzerland), Heterorhabditis bacteriophaga (e. g. Nemasys^{®} G from BASF Agricultural Specialities Limited, UK), Isaria fumosorosea Apopka-97 (ATCC 20874) (PFR-97^{™} from Certis LLC, USA), cis-jasmone (US 8,221,736), laminarin (e. g. in VACCIPLANT from Laboratoires Goemar, St. Malo, France or Stähler SA, Switzerland), Lecanicillium longisporum KV42 and KV71 (e. g. VERTALEC^{®} from Koppert BV, Netherlands), L. muscarium KV01 (formerly Verticillium lecanii) (e. g. MYCOTAL from Koppert BV, Netherlands), Lysobacter antibioticus 13-1 (Biological Control 45, 288-296, 2008), L. antibioticus HS124 (Curr. Microbiol. 59(6), 608-615, 2009), L. enzymogenes 3.1T8 (Microbiol. Res. 158, 107-115; Biological Control 31(2), 145-154, 2004), Metarhizium anisopliae var. acridum IMI 330189 (isolated from Ornithacris cavroisi in Niger; NRRL 50758) (e. g. GREEN MUSCLE^{®} from BASF Agricultural Specialities (Pty) Ltd., South Africa), M. a. var. acridum Fl-985 (e. g. GREEN GUARD^{®} SC from BASF Agricultural Specialties Pty Ltd, Australia), M. anisopliae FI-1045 (e. g. BIOCANE^{®} from BASF Agricultural Specialties Pty Ltd, Australia), M. anisopliae F52 (DSM 3884, ATCC 90448; e. g. MET52^{®} Novozymes Biologicals BioAg Group, Canada), M. anisopliae ICIPE 69 (e. g. METATHRIPOL from ICIPE, Nairobe, Kenya), Metschnikowia fructicola (NRRL Y-30752; e. g. SHEMER^{®} from Agrogreen, Israel, now distributed by Bayer CropSciences, Germany; US 6,994,849), Microdochium dimerum (e. g. ANTIBOT^{®} from Agrauxine, France), Microsphaeropsis ochracea P130A (ATCC 74412 isolated from apple leaves from an abandoned orchard, St-Joseph-du-Lac, Quebec, Canada in 1993; Mycologia 94(2), 297-301, 2002), Muscodor albus QST 20799 originally isolated from the bark of a cinnamon tree in Honduras (e. g. in development products Muscudor^{™} or QRD300 from AgraQuest, USA), Neem oil (e.g. TRILOGY^{®}, TRIACT^{®} 70 EC from Certis LLC, USA), Nomuraea rileyi strains SA86101, GU87401, SR86151, CG128 and VA9101,
Paecilomyces fumosoroseus FE 9901 (e. g. NO FLY^{™} from Natural Industries, Inc., USA), P. lilacinus 251 (e. g. in BioAct^{®}/MeloCon^{®} from Prophyta, Germany; Crop Protection 27, 352-361, 2008; originally isolated from infected nematode eggs in the Philippines), P. lilacinus DSM 15169 (e. g. NEMATA^{®} SC from Live Systems Technology S.A., Colombia), P. lilacinus BCP2 (NRRL 50756; e. g. PL GOLD from BASF Agricultural Specialities (Pty) Ltd., South Africa),
mixture of Paenibacillus alvei NAS6G6 (NRRL B-50755) and Bacillus pumilus (e.g. BAC-UP from BASF Agricultural Specialities (Pty) Ltd., South Africa),
Pantoea vagans (formerly agglomerans) C9-1 (originally isolated in 1994 from apple stem tissue; BlightBan C9-1^{®} from NuFrams America Inc., USA, for control of fire blight in apple; J. Bacteriol. 192(24) 6486-6487, 2010),
Pasteuria sp. ATCC PTA-9643 (WO 2010/085795), P. nishizawae Pn1 (e.g. CLARIVA PN from Syngenta Crop Protection, LLC, Greenborom ;C, USA), Pasteuria sp. ATCC SD-5832 (WO 2012/064527), P. nishizawae (WO 2010/80169), P. penetrans (US 5,248,500), P. ramose (WO 2010/80619), P. thornea (WO 2010/80169), P. usgae (WO 2010/80169),
Penicillium bilaiae (e. g. Jump Start^{®} from Novozymes Biologicals BioAg Group, Canada, originally isolated from soil in southern Alberta; Fertilizer Res. 39, 97-103, 1994),
Phlebiopsis gigantea (e. g. RotStop^{®} from Verdera Oy, Finland), Pichia anomala WRL-076 (NRRL Y-30842; US 8,206,972), potassium bicarbonate (e. g. Amicarb^{®} from Stähler SA, Switzerland), potassium silicate (e. g. Sil-MATRIX^{™} from Certis LLC, USA), Pseudozyma flocculosa PF-A22 UL (e. g. Sporodex^{®} from Plant Products Co. Ltd., Canada),
Pseudomonas sp. DSM 13134 (WO 2001/40441, e. g. in PRORADIX from Sourcon Padena GmbH & Co. KG, Hechinger Str. 262, 72072 Tübingen, Germany), P. chloraphis MA 342 (e. g. in CERALL or CEDEMON from BioAgri AB, Uppsala, Sweden), P. fluorescens CL 145A (e. g. in ZEQUANOX from Marrone Biolnnovations, Davis, CA, USA; J. Invertebr. Pathol. 113(1):104-14, 2013),
Pythium oligandrum DV 74 (ATCC 38472; e. g. POLYVERSUM^{®} from Remeslo SSRO, Biopreparaty, Czech Rep. and GOWAN, USA; US 2013/0035230), Reynoutria sachlinensis extract (e. g. REGALIA^{®} SC from Marrone Biolnnovations, Davis, CA, USA),
Rhizobium leguminosarum bv. phaseoli (e. g. RHIZO-STICKfrom BASF Corp., USA), R. I. bv. trifolii RP113-7 (e. g. DORMAL from BASF Corp., USA; Appl. Environ. Microbiol. 44(5), 1096-1101), R. I. bv. viciae P1NP3Cst (also referred to as 1435; New Phytol. 179(1), 224-235, 2008; e. g. in NODULATOR PL Peat Granule from BASF Corp., USA; or in NODULATOR XL PL from BASF Agricultural Specialties Ltd., Canada), R. I. bv. viciae SU303 (e. g. NODULAID Group E from BASF Agricultural Specialties Pty Ltd, Australia), R. I. bv. viciae WSM1455 (e. g. NODULAID Group F from BASF Agricultural Specialties Pty Ltd, Australia), R. tropici SEMI A 4080 (identical to PRF 81; Soil Biology & Biochemistry 39, 867-876, 2007),
Sinorhizobium meliloti MSDJ0848 (INRA, France) also referred to as strain 2011 or RCR2011 (Mol. Gen. Genomics 272, 1-17, 2004; e. g. DORMAL ALFALFA from BASF Corp., USA; NITRAGIN^{®} Gold from Novozymes Biologicals BioAg Group, Canada),
Sphaerodes mycoparasitica IDAC 301008-01 (WO 2011/022809), Spodoptera littoralis nucleopolyhedrovirus (SpIiNPV) (e.g. in LITTOVIR from Adermatt Biocontrol, Switzerland), Steinernema carpocapsae (e. g. MILLENIUM^{®} from BASF Agricultural Specialities Limited, UK), S. feltiae (NEMASHIELD^{®} from BioWorks, Inc., USA; NEMASYS^{®} from BASF Agricultural Specialities Limited, UK), S. kraussei L137 (NEMASYS^{®} L from BASF Agricultural Specialities Limited, UK), Streptomyces griseoviridis K61 (e. g. MYCOSTOP^{®} from Verdera Oy, Espoo, Finland; Crop Protection 25, 468-475, 2006), S. lydicus WYEC 108 (e. g. Actinovate^{®} from Natural Industries, Inc., USA, US 5,403,584), S. violaceusniger YCED-9 (e. g. DT-9^{®} from Natural Industries, Inc., USA, US 5,968,503), Talaromyces flavus V117b (e. g. PROTUS^{®} from Prophyta, Germany),
Trichoderma asperellum SKT-1 (e. g. ECO-HOPE^{®} from Kumiai Chemical Industry Co., Ltd., Japan), T. asperellum ICC 012 (e. g. in TENET WP, REMDIER WP, BIOTEN WP from Isagro NC, USA, BIO-TAM from AgraQuest, USA), T. atroviride LC52 (e. g. SENTINEL^{®} from Agrimm Technologies Ltd, NZ), T. atroviride CNCM I-1237 (e. g. in Esquive WG from Agrauxine S.A., France, e. g. against pruning wound diseases on vine and plant root pathogens), T. fertile JM41R (NRRL 50759; e. g. TRICHOPLUS^{™} from BASF Agricultural Specialities (Pty) Ltd., South Africa), T. gamsii ICC 080 (e. g. in TENET WP, REMDIER WP, BIOTEN WP from Isagro NC, USA, BIO-TAM from AgraQuest, USA), T. harzianum T-22 (also called KRL-AG2; ATCC 20847; e. g. PLANTSHIELD^{®} from BioWorks Inc., USA or SabrEx^{™} from Advanced Biological Marketing Inc., Van Wert, OH, USA; BioControl 57, 687-696, 2012), T. harzianum TH 35 (e. g. ROOT PRO^{®} from Mycontrol Ltd., Israel), T. harzianum T-39 (e. g. TRICHODEX^{®} and TRICHODERMA 2000^{®} from Mycontrol Ltd., Israel and Makhteshim Ltd., Israel), mixture of T. harzianum and T. viride (e. g. TRICHOPEL from Agrimm Technologies Ltd, NZ), T. harzianum ICC012 and T. viride ICC080 (e. g. REMEDIER^{®} WP from Isagro Ricerca, Italy), T. polysporum and T. harzianum (e. g. BINAB^{®} from BINAB Bio-Innovation AB, Sweden), T. stromaticum (e. g. TRICOVAB^{®} from C.E.P.L.A.C., Brazil), T. virens G1-3 (also called GI-3; ATCC 58678; e.g. QuickRoots^{™} from TJ Technologies, Watertown, SD, USA; CA 2471555 A1), T. virens GL-21 (also called G1-21; US 7429477 B2; e. g. SOILGARD^{®} 12G from Certis LLC, USA, EPA Registration Number: 70051-3 and EPA Establishment Number: 067250-IL-001), T. virens G-41 (also called 041, #41X or ABM 127; isolated from soil samples taken from Aphanomyces-suppressive bean fields in Livingston County, New York; US 4,996,157; e. g. ROOTSHIELD^{®} PLUS from BioWorks, Inc., USA), T. viride (e. g. TRIECO^{®} from Ecosense Labs. (India) Pvt. Ltd., Indien, BIO-CURE^{®} F from T. Stanes & Co. Ltd., Indien), T. viride TV1 (e. g. T. viride TV1 from Agribiotec srl, Italy) and
Ulocladium oudemansii HRU3 (e. g. in BOTRY-ZEN^{®} from Botry-Zen Ltd, NZ).

Even more preferred biologicals to be used in the process according to the present invention include the following substances and mixtures thereof:
Azospirillum amazonense BR 11140 (SpY2T) (Proc. 9th Int. and 1st Latin American PGPR meeting, Quimara, Medellin, Colombia 2012, p. 60, ISBN 978-958-46-0908-3), A. brasilense AZ39 (Eur. J. Soil Biol 45(1), 28-35, 2009), A. brasilense XOH (e. g. AZOS from Xtreme Gardening, USA or RTI Reforestation Technologies International; USA), A. brasilense BR 11002 (Proc. 9th Int. and 1st Latin American PGPR meeting, Quimara, Medellin, Colombia 2012, p. 60, ISBN 978-958-46-0908-3), A. brasilense BR 11005 (SP245; e. g. in GELFIX Gramíneas from BASF Agricultural Specialties Ltd., Brazil), A. brasilense strains Ab-V5 and Ab-V6 (e. g. in AzoMax from Novozymes BioAg Produtos papra Agricultura Ltda., Quattro Barras, Brazil or SimbioseMaíz^{®} from Simbiose-Agro, Cruz Alta, RS, Brazil; Plant Soil 331, 413-425, 2010), A. lipoferum BR 11646 (Sp31) (Proc. 9th Int. and 1st Latin American PGPR meeting, Quimara, Medellin, Colombia 2012, p. 60),
Bacillus amyloliquefaciens FZB42 (e. g. in RhizoVital^{®} 42 from AbiTEP GmbH, Berlin, Germany), B. amyloliquefaciens IN937a (J. Microbiol. Biotechnol. 17(2), 280-286, 2007; e. g. in BioYield^{®} from Gustafson LLC, TX, USA), B. amyloliquefaciens IT-45 (CNCM I 3800) (e. g. Rhizocell C from ITHEC, France), B. amyloliquefaciens TJ1000 (also called 1BE; ATCC BAA-390; e.g. QuickRoots^{™} from TJ Technologies, Watertown, SD, USA; CA 2471555 A1), B. amyloliquefaciens ssp. plantarum MBI600 (NRRL B-50595, deposited at USDA) (e. g. Integral^{®}, Subtilex^{®} NG from BASF Corp., USA), B. cereus CNCM I-1562 (US 6,406,690), B. firmus CNCM I-1582 (WO 2009/126473, WO 2009/124707, US 6,406,690; Votivo^{®} from Bayer Crop Science LP, USA),
B. pumilus GB34 (ATCC 700814; e. g. in YieldShield^{®} from Gustafson LLC, TX, USA),
Bacillus pumilus KFP9F (NRRL B-50754) (e. g. in BAC-UP or FUSION-P from BASF Agricultural Specialities (Pty) Ltd., South Africa), B. pumilus QST 2808 (NRRL B 30087) (e. g. Sonata^{®} and Ballad^{®} Plus from AgraQuest Inc., USA),
B. subtilis CX-9060 (Federeal Register 77(7), 1633-1637; Certis U.S.A., L.L.C.), B. subtilis GB03 (e. g. Kodiak^{®} or BioYield^{®} from Gustafson, Inc., USA; or Companion^{®} from Growth Products, Ltd., White Plains, NY 10603, USA), B. subtilis GB07 (Epic^{®} from Gustafson, Inc., USA), B. subtilis QST-713 (NRRL B 21661 in Rhapsody^{®}, Serenade^{®} MAX and Serenade^{®} ASO from AgraQuest Inc., USA), B. subtilis var. amyloliquefaciens FZB24 (e. g. Taegro^{®} from Novozyme Biologicals, Inc., USA), B. subtilis var. amyloliquefaciens D747 (FERM BP-8234; KR 100903253; e. g. Double Nickel^{™} 55 WDG or Double Nickel^{™} LC from Certis LLC, USA),
Bradyrhizobium sp. (e. g. Vault^{®} from BASF Corp., USA), B. japonicum (e. g. VAULT^{®} from BASF Corp., USA),
Burkholderia sp. A396 (NRRL B-50319; WO 2013/032693; Marrone Bio Innovations, Inc., USA), Candida oleophila I-182 (NRRL Y-18846; e. g. Aspire^{®} from Ecogen Inc., USA,
Coniothyrium minitans CON/M/91-08 (DSM 9660; e. g. Contans^{®} WG, Intercept^{®} WG from Prophyta Biologischer Pflanzenschutz GmbH, Germany; WO 1996/021358),
Paecilomyces fumosoroseus FE 9901 (e. g. NO FLY^{™} from Natural Industries, Inc., USA), P. lilacinus 251 (e. g. in BioAct^{®}/MeloCon^{®} from Prophyta, Germany; Crop Protection 27, 352-361, 2008; originally isolated from infected nematode eggs in the Philippines), P. lilacinus DSM 15169 (e. g. NEMATA^{®} SC from Live Systems Technology S.A., Colombia), P. lilacinus BCP2 (NRRL 50756; e. g. PL GOLD from BASF Agricultural Specialities (Pty) Ltd., South Africa),
mixture of Paenibacillus alvei NAS6G6 (NRRL B-50755) and Bacillus pumilus (e.g. BAC-UP from BASF Agricultural Specialities (Pty) Ltd., South Africa),
Pasteuria sp. ATCC PTA-9643 (WO 2010/085795), P. nishizawae Pn1 (e.g. CLARIVA PN from Syngenta Crop Protection, LLC, Greenborom ;C, USA), Pasteuria sp. ATCC SD-5832 (WO 2012/064527), P. nishizawae (WO 2010/80169), P. penetrans (US 5,248,500), P. ramose (WO 2010/80619), P. thornea (WO 2010/80169), P. usgae (WO 2010/80169),
Penicillium bilaiae (e. g. Jump Start^{®} from Novozymes Biologicals BioAg Group, Canada, originally isolated from soil in southern Alberta; Fertilizer Res. 39, 97-103, 1994),
Pseudomonas sp. DSM 13134 (WO 2001/40441, e. g. in PRORADIX from Sourcon Padena GmbH & Co. KG, Hechinger Str. 262, 72072 Tübingen, Germany), P. chloraphis MA 342 (e. g. in CERALL or CEDEMON from BioAgri AB, Uppsala, Sweden), P. fluorescens CL 145A (e. g. in ZEQUANOX from Marrone Biolnnovations, Davis, CA, USA; J. Invertebr. Pathol. 113(1):104-14, 2013),
Rhizobium leguminosarum bv. phaseoli (e. g. RHIZO-STICKfrom BASF Corp., USA), R. I. bv. trifolii RP113-7 (e. g. DORMAL from BASF Corp., USA; Appl. Environ. Microbiol. 44(5), 1096-1101), R. I. bv. viciae P1NP3Cst (also referred to as 1435; New Phytol. 179(1), 224-235, 2008; e. g. in NODULATOR PL Peat Granule from BASF Corp., USA; or in NODULATOR XL PL from BASF Agricultural Specialties Ltd., Canada), R. I. bv. viciae SU303 (e. g. NODULAID Group E from BASF Agricultural Specialties Pty Ltd, Australia), R. I. bv. viciae WSM1455 (e. g. NODULAID Group F from BASF Agricultural Specialties Pty Ltd, Australia), R. tropici SEMI A 4080 (identical to PRF 81; Soil Biology & Biochemistry 39, 867-876, 2007),
Sinorhizobium meliloti MSDJ0848 (INRA, France) also referred to as strain 2011 or RCR2011 (Mol. Gen. Genomics 272, 1-17, 2004; e. g. DORMAL ALFALFA from BASF Corp., USA; NITRAGIN^{®} Gold from Novozymes Biologicals BioAg Group, Canada),
Trichoderma asperellum SKT-1 (e. g. ECO-HOPE^{®} from Kumiai Chemical Industry Co., Ltd., Japan), T. asperellum ICC 012 (e. g. in TENET WP, REMDIER WP, BIOTEN WP from Isagro NC, USA, BIO-TAM from AgraQuest, USA), T. atroviride LC52 (e. g. SENTINEL^{®} from Agrimm Technologies Ltd, NZ), T. atroviride CNCM I-1237 (e. g. in Esquive WG from Agrauxine S.A., France, e. g. against pruning wound diseases on vine and plant root pathogens), T. fertile JM41R (NRRL 50759; e. g. TRICHOPLUS^{™} from BASF Agricultural Specialities (Pty) Ltd., South Africa), T. gamsii ICC 080 (e. g. in TENET WP, REMDIER WP, BIOTEN WP from Isagro NC, USA, BIO-TAM from AgraQuest, USA), T. harzianum T-22 (also called KRL-AG2; ATCC 20847; e. g. PLANTSHIELD^{®} from BioWorks Inc., USA or SabrEx^{™} from Advanced Biological Marketing Inc., Van Wert, OH, USA; BioControl 57, 687-696, 2012), T. harzianum TH 35 (e. g. ROOT PRO^{®} from Mycontrol Ltd., Israel), T. harzianum T-39 (e. g. TRICHODEX^{®} and TRICHODERMA 2000^{®} from Mycontrol Ltd., Israel and Makhteshim Ltd., Israel), mixture of T. harzianum and T. viride (e. g. TRICHOPEL from Agrimm Technologies Ltd, NZ), T. harzianum ICC012 and T. viride ICC080 (e. g. REMEDIER^{®} WP from Isagro Ricerca, Italy), T. polysporum and T. harzianum (e. g. BINAB^{®} from BINAB Bio-Innovation AB, Sweden), T. stromaticum (e. g. TRICOVAB^{®} from C.E.P.L.A.C., Brazil), T. virens G1-3 (also called GI-3; ATCC 58678; e.g. QuickRoots^{™} from TJ Technologies, Watertown, SD, USA; CA 2471555 A1), T. virens GL-21 (also called G1-21; US 7429477 B2; e. g. SOILGARD^{®} 12G from Certis LLC, USA, EPA Registration Number: 70051-3 and EPA Establishment Number: 067250-IL-001), T. virens G-41 (also called 041, #41X or ABM 127; isolated from soil samples taken from Aphanomyces-suppressive bean fields in Livingston County, New York; US 4,996,157; e. g. ROOTSHIELD^{®} PLUS from BioWorks, Inc., USA), T. viride (e. g. TRIECO^{®} from Ecosense Labs. (India) Pvt. Ltd., Indien, BIO-CURE^{®} F from T. Stanes & Co. Ltd., Indien), T. viride TV1 (e. g. T. viride TV1 from Agribiotec srl, Italy).

The most preferred biologicals to be used in the process according to the present invention include the following substances and mixtures thereof:
A. brasilense XOH (e. g. AZOS from Xtreme Gardening, USA or RTI Reforestation Technologies International; USA), A. brasilense BR 11002 (Proc. 9th Int. and 1st Latin American PGPR meeting, Quimara, Medellin, Colombia 2012, p. 60, ISBN 978-958-46-0908-3), A. brasilense BR 11005 (SP245; e. g. in GELFIX Gramíneas from BASF Agricultural Specialties Ltd., Brazil), A. brasilense strains Ab-V5 and Ab-V6 (e. g. in AzoMax from Novozymes BioAg Produtos papra Agricultura Ltda., Quattro Barras, Brazil or SimbioseMaíz^{®} from Simbiose-Agro, Cruz Alta, RS, Brazil; Plant Soil 331, 413-425, 2010),
Bacillus amyloliquefaciens FZB42 (e. g. in RhizoVital^{®} 42 from AbiTEP GmbH, Berlin, Germany), B. amyloliquefaciens IN937a (J. Microbiol. Biotechnol. 17(2), 280-286, 2007; e. g. in BioYield^{®} from Gustafson LLC, TX, USA), B. amyloliquefaciens IT-45 (CNCM I 3800) (e. g. Rhizocell C from ITHEC, France), B. amyloliquefaciens TJ1000 (also called 1BE; ATCC BAA-390; e.g. QuickRoots^{™} from TJ Technologies, Watertown, SD, USA; CA 2471555 A1), B. amylolique¬faciens ssp. plantarum MBI600 (NRRL B-50595, deposited at USDA) (e. g. Integral^{®}, Subtilex^{®} NG from BASF Corp., USA), B. cereus CNCM I-1562 (US 6,406,690), B. firmus CNCM I-1582 (WO 2009/126473, WO 2009/124707, US 6,406,690; Votivo^{®} from Bayer Crop Science LP, USA),
Bacillus pumilus KFP9F (NRRL B-50754) (e. g. in BAC-UP or FUSION-P from BASF Agricultural Specialities (Pty) Ltd., South Africa), B. pumilus QST 2808 (NRRL B 30087) (e. g. Sonata^{®} and Ballad^{®} Plus from AgraQuest Inc., USA),
B. japonicum (e. g. VAULT^{®} from BASF Corp., USA),
Coniothyrium minitans CON/M/91-08 (DSM 9660; e. g. Contans^{®} WG, Intercept^{®} WG from Prophyta Biologischer Pflanzenschutz GmbH, Germany; WO 1996/021358),
P. nishizawae Pn1 (e.g. CLARIVA PN from Syngenta Crop Protection, LLC, Greenborom ;C, USA),
Penicillium bilaiae (e. g. Jump Start^{®} from Novozymes Biologicals BioAg Group, Canada, originally isolated from soil in southern Alberta; Fertilizer Res. 39, 97-103, 1994),
P. fluorescens CL 145A (e. g. in ZEQUANOX from Marrone Biolnnovations, Davis, CA, USA; J. Invertebr. Pathol. 113(1): 104-14, 2013),
Rhizobium leguminosarum bv. phaseoli (e. g. RHIZO-STICK from BASF Corp., USA), R. I. bv. trifolii RP113-7 (e. g. DORMAL from BASF Corp., USA; Appl. Environ. Microbiol. 44(5), 1096-1101), R. I. bv. viciae P1NP3Cst (also referred to as 1435; New Phytol. 179(1), 224-235, 2008; e. g. in NODULATOR PL Peat Granule from BASF Corp., USA; or in NODULATOR XL PL from BASF Agricultural Specialties Ltd., Canada), R. I. bv. viciae SU303 (e. g. NODULAID Group E from BASF Agricultural Specialties Pty Ltd, Australia), R. I. bv. viciae WSM1455 (e. g. NODULAID Group F from BASF Agricultural Specialties Pty Ltd, Australia), R. tropici SEMI A 4080 (identical to PRF 81; Soil Biology & Biochemistry 39, 867-876, 2007),
Sinorhizobium meliloti MSDJ0848 (INRA, France) also referred to as strain 2011 or RCR2011 (Mol. Gen. Genomics 272, 1-17, 2004; e. g. DORMAL ALFALFA from BASF Corp., USA; NITRAGIN^{®} Gold from Novozymes Biologicals BioAg Group, Canada),
T. fertile JM41R (NRRL 50759; e.g. TRICHOPLUS^{™} from BASF Agricultural Specialities (Pty) Ltd., South Africa).

The biological is present in the formulations for agricultural end use in an amount of 1×10² to 1×10⁸ CFU/gram, preferably1×10³ to 1×10⁷ CFU/gram, and even more preferably 5×10³ to 5×10⁵ CFU/gram based on the total composition.

Preferred nutrients to be used in the compositions according to the present invention include the following substances and mixtures thereof:
Alpha-tocopherol, trehalose, glutamate, potassium sorbate, various sugars like glucose, sucrose, lactose and maltodextrine (see H.D. Burges: Formulation of Micobial Biopestcides, Springer, 1998).

The nutrients are present in the formulations for agricultural end use in an amount of 0.001 to1.0 % by weight, preferably 0.005 to 0.5 % by weight, and even more preferably 0.01 to 0.1 % by weight based on the total composition.

The compositions according to the present invention can be converted into those customary types of herbicidal formulations comprising clomazone which are common in the agricultural industry including solutions, emulsions, suspensions, dusts, powders, pastes and granules.

The composition type depends on the particular intended purpose; in each case, it should ensure a fine and uniform distribution of the compounds according to the invention.

The present invention refers to two basic types of formulation: In the first type of formulations, stock formulations or formulation concentrates of the respective active compounds, e.g. for storage before use, are meant. The various active ingredients can be kept in separate formulations before use and the actual application formulation for agricultural end use (which is the second type of formulation, e.g. a tank mix or spray solution), can be prepared from the first type of formulation right before the agricultural application. Such concentration may require further dilution upon application on the agricultural field.

In the second type of formulation, the formulation for agricultural end use, typical tank mixes, spray solutions, application fluids or the like are meant. The latter second type of formulations is ready to use, i.e. ready to be applied, on the corresponding agricultural area without further dilution or modification. That is, the second type of tank mix compositions already contains the corresponding mixture of active compounds (A) and (B) in the required concentration and required relative amount to be directly applied during the agricultural end use on the agricultural field. The concentrations of the active compounds according to the present invention therefore refer to the effective concentrations required for agricultural end use, e.g. as so-called tank-mix or spray solution concentrations.

Preferred examples of the first type of formulation are composition types like suspensions (SC, OD, FS), emulsifiable concentrates (EC), emulsions (EW - water emulsion -, EO, ES), pastes, pastilles, while wettable powders or dusts (WP, SP, SS, WS, DP, DS) or granules (GR, FG, GG, MG), which can be water-soluble or wettable, as well as gel formulations for the treatment of plant propagation materials such as seeds (GF) are less preferred. Suspensions, emulsifiable concentrates, and emulsions are especially preferred formulations for the compositions according to the present invention. Usually the composition types (e. g. SC, OD, FS, EC, WG, SG, WP, SP, SS, WS, GF) are employed diluted. Composition types such as DP, DS, GR, FG, GG and MG are usually used undiluted.

The compositions are prepared in a known manner. When the herbicidal composition according to the present invention is an aqueous formulation, the salt according to the present invention may dissociate into anions and cations. The compositions may also comprise auxiliaries which are customary in agrochemical formulations. The auxiliaries used depend on the particular application form and active substance, respectively.

Examples for suitable auxiliaries are solvents, solid carriers, dispersants or emulsifiers (such as further solubilizers, protective colloids, surfactants and adhesion agents), organic and anorganic thickeners, bactericides, anti-freezing agents, anti-foaming agents, if appropriate colorants and tackifiers or binders (e. g. for seed treatment formulations). Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e. g. toluene, xylene, paraffin, tetrahydronaphthalene, alkylated naphthalenes or their derivatives, alcohols such as methanol, ethanol, propanol, butanol and cyclohexanol, glycols (such as ethylene glycol or 1 ,2-propylene glycol), ketones such as cyclohexanone and gamma-butyrolactone, fatty acid dimethylamides, fatty acids and fatty acid esters and strongly polar solvents, e. g. amines such as N-methylpyrrolidone. Preferred solvent is water.

Solid carriers are mineral earths such as silicates, silica gels, talc, kaolins, limestone, lime, chalk, bole, loess, clays, dolomite, diatomaceous earth, calcium sulfate, magnesium sulfate, iron sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nutshell meal, cellulose powders and other solid carriers.

Suitable surfactants (adjuvants, wetters, tackifiers, dispersants or emulsifiers) are alkali metal, alkaline earth metal and ammonium salts of aromatic sulfonic acids, such as ligninsoulfonic acid (Borresperse<(R)> types, Borregard, Norway) phenolsulfonic acid, naphthalenesulfonic acid (Morwet<(R)> types, Akzo Nobel, U.S.A.), dibutylnaphthalene- sulfonic acid (Nekal<(R)> types, BASF, Germany), and fatty acids, alkylsulfonates, alkyl- arylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formaldehyde, polyoxy-ethylene octylphenyl ether, ethoxylated isooctylphenol, octylphenol, nonylphenol, alkylphenyl polyglycol ethers, tributylphenyl polyglycol ether, tristearyl- phenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and proteins, denatured proteins, polysaccharides (e. g. methylcellulose), hydrophobically modified starches, polyvinyl alcohols (Mowiol<(R)> types, Clariant, Switzerland), polycarboxylates (Sokolan<(R)> types, BASF, Germany), polyalkoxylates, polyvinyl- amines (Lupasol<(R)> types, BASF, Germany), polyvinylpyrrolidone and the copolymers thereof. Further suitable surfactants (especially for agrochemical compositions comprising glyphosate) are alkoxylated C4-22-alkylamines, such as ethoxylated tallow amine (POEA) and the surfactants disclosed in EP1389040 (e.g. those in Examples 1 to 14).

Examples for thickeners (i. e. compounds that impart a modified flowability to the compositions, i.e. high viscosity under static conditions and low viscosity during agitation) are polysaccharides and organic and anorganic clays such as Xanthan gum (Kelzan<(R)>, CP Kelco, U.S.A.), Rhodopol<(R)> 23 (Rhodia, France), Veegum<(R)> (R.T. Vanderbilt, U.S.A.) or Attaclay<(R)> (Engelhard Corp., NJ, USA).

Bactericides may be added for preservation and stabilization of the compositions. Examples for suitable bactericides are those based on dichlorophene and benzylalcohol hemi formal (Proxel<(R)> from ICI or Acticide<(R)> RS from Thor Chemie and Kathon<(R)> MK from Rohm & Haas) and isothiazolinone derivatives such as alkylisothiazolinones and benzisothiazolinones (Acticide<(R)> MBS from Thor Chemie).

Examples for suitable anti-freezing agents are ethylene glycol, propylene glycol, urea and glycerin.

Examples for anti-foaming agents are silicone emulsions (such as e. g. Silikon<(R)> SRE, Wacker, Germany or Rhodorsil<(R)>, Rhodia, France), long chain alcohols, fatty acids, salts of fatty acids, fluoroorganic compounds and mixtures thereof.

Examples for tackifiers or binders are polyvinylpyrrolidone, polyvinylacetates, polyvinyl alcohols and cellulose ethers (Tylose<(R)>, Shin-Etsu, Japan).

Examples of colorants are both sparingly water-soluble pigments and water-soluble dyes. Examples which may be mentioned are the dyes known under the names Rhodamin B, C.I. Pigment Red 1 12 and C.I. Solvent Red 1 , and also pigment blue 15:4, pigment blue 15:3, pigment blue 15:2, pigment blue 15:1 , pigment blue 80, pigment yellow 1 , pigment yellow 13, pigment red 1 12, pigment red 48:2, pigment red 48:1 , pigment red 57:1 , pigment red 53:1 , pigment orange 43, pigment orange 34, pigment orange 5, pigment green 36, pigment green 7, pigment white 6, pigment brown 25, basic violet 10, basic violet 49, acid red 51 , acid red 52, acid red 14, acid blue 9, acid yellow 23, basic red 10, basic red 108.

Powders, materials for spreading and dusts can be prepared by mixing or concomitantly grinding the compounds according to the present invention, or the salts thereof, and, if appropriate, further active substances, like other pesticides, with at least one solid carrier. Granules, e. g. coated granules, impregnated granules and homogeneous granules, can be prepared by binding the active substances to solid carriers.

Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nutshell meal, cellulose powders and other solid carriers.

The compositions according to the present invention are herbicidal compositions because they contain the herbicidal compound clomazone. In addition to clomazone a second compound (B) is present in the compositions according to the present invention which is able to reduce the effective volatility of clomazone in the respective composition. Accordingly, the compound (B) in the compositions according to the present invention can be used, i.e. added for reducing the volatility of clomazone in the composition.

In a preferred embodiment, the volatility of clomazone in the composition according to the present invention comprising compounds (A) and (B) prepared by the method hereby described is at least 5 % lower, preferably at least 10 % lower, more preferably at least 20 % lower, even more preferably 30 % lower, and most preferably at least 40 % lower, than the volatility of clomazone in the corresponding comparative composition in which only clomazone is present as compound (A) whereas compound (B) is absent. The relative reduction in volatility is measured by the loss of clomazone per time period, preferably at 25°C after 24 hours, in the composition according to the present invention comprising compounds (A) and (B) relative to the comparative composition in which compound (B) is absent. The amount of clomazone lost due to volatility can be preferably determined by GC using the experimental method as it is described in the method section below.

Since at least some of the compounds (B) additionally have independent herbicidal activity, preferably dimethenamid, a synergistic effect can be achieved by combining clomazone with such additional herbicidal compound because not only the herbicidal properties of at least two complementary herbicidal compounds are combined but, in addition, the volatility of clomazone is diminished by the additional presence of an additional compound like dimethenamid, thereby additionally increasing the herbicidal activity of clomazone due to the prolonged presence of clomazone on the treated soil.

Compound (B) is defined by the following formula (Ilb): 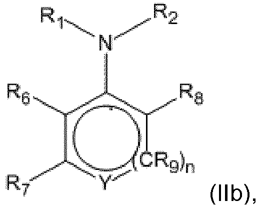
wherein R₁ is selected from -CH₃, -CH₂-CH₃, -(CH₂)₂-CH₃, -C(CH₃)-CH₃, acyl, like formyl, acetyl, propionyl, halogenated acyl, like halogenated acetyl, halogenated propionyl, preferably -CO-CH₂Cl, -CO-CHClCH₃, -CO-CH₂-CH₂Cl
R₂ is selected from linear or branched, optionally chlorinated and/or hydroxylated C₁ to C₆ alkyl, preferably methyl, ethyl, propyl, butyl, pentyl, hexyl, isopropyl, isobutyl, sec-butyl, tert-butyl, 1-ethylpropyl, 2-ethylpropyl, and methoxylated or ethoxylated C₁ to C₆ alkyl, preferably methoxymethyl, 1-methoxy-ethyl, 2-methoxy-ethyl, 1-methoxy-1-propyl, 2-methoxy-1-propyl, 1-methoxy-2-propyl, , 2-methoxy-2-propyl, 2-methoxy-3-propyl, 1-ethoxy-ethyl, 2-ethoxy-ethyl, 1-ethoxy-1-propyl, 2-ethoxy-1-propyl, 1-ethoxy-2-propyl, , 2-ethoxy-2-propyl, 2-ethoxy-3-propyl, and N-(1H-pyrazol-1-ylmethyl,
R₆, R₇, R₈ and R₉ are independently selected from linear or branched, saturated or unsaturated, optionally hydroxy-substituted C₁ to C₆ alkyl, preferably -H, -CH₃, -CH₂-CH₃, -(CH₂)₂-CH₃, - C(CH₃)-CH₃, -Cl, -OH or -NO₂,
Y is S, n is 0.

In another preferred embodiment of the present invention, the compound (B) is selected from the compound according to the following formula (IIIa):

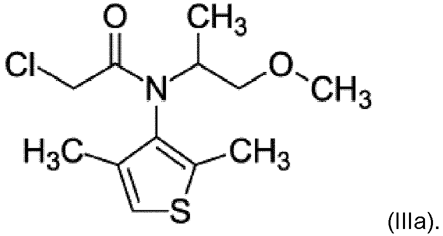

In another preferred embodiment of the present invention, the compound (B) has water-solubility of not higher than 50 g/L, preferably not higher than 40 g/L.

In another preferred embodiment of the present invention, the compound (B) has vapor pressure of less than 1 Pa at ambient temperature.

In another preferred embodiment of the present invention, the compound (B) is a liquid at standard ambient temperature of 25°C and standard ambient pressure of 100 kPa or an amorphous solid.

In another preferred embodiment of the present invention, the ratio of (A) clomazone to compound (B) is from 1:12 to 1:0.5, preferably 1:10 to 1:3, more preferably 1:7 to 1:5, based on the weight of the compounds.

In another preferred embodiment of the present invention, the relative amount of compound (B) in the formulation for agricultural end use is not higher than 90 % by weight, preferably not higher than 80 % by weight, more preferably not higher than 70 % by weight, and most preferably not higher than 60 % by weight, based on the total weight of the composition.

In another preferred embodiment of the present invention, the clomazone is a non-encapsulated clomazone, preferably not encapsulated by a polymer.

In another preferred embodiment of the present invention, the composition is formulated as an emulsion, an emulsifiable concentrate, or a suspension.

In another preferred embodiment of the present invention, the use of compound (B) as defined above is claimed for reducing the volatility of clomazone in a herbicidal composition, wherein the reduction in volatility of clomazone in the herbicidal composition is at least 5 %, more preferably 10 %, even more preferably 20 %, even more preferably 30 %, and most preferably 40 %, relative to the volatility of clomazone in the herbicidal composition without compound (B).

In another preferred embodiment of the present invention, the use of compound (B) as defined above is claimed for reducing the volatility of clomazone in a herbicidal composition, comprising the step of adding the compound (B) to a herbicidal composition comprising clomazone.

Examples: The present invention is further illustrated by the following examples which are however not intended to limit the scope of the present invention.

Methods: There are several methods that can be used to determine the volatility of a certain active ingredient, typically a pesticide as mentioned above and in particular of the herbicidal compound clomazone for which reduced volatility is demonstrated when contained in the compositions according to the present invention. Established volatility measurement methods are for instance disclosed in previous patent application WO 2011/039172 A2 giving disclosure to three different approaches: The measurement of volatility by use of TGA, the determination of volatility in an open Petri dish and the determination of volatility using a bioassay. All those measurements are equally applicable for measuring the volatility of the compounds, which are components in the compositions according to the present invention, particularly for the herbicidal compound clomazone whose volatility is reduced in the compositions according to the present invention.

However, a preferred method for determining the volatility of the compounds contained in the compositions according to the present invention is carried out as follows: Glass tubes (internal diameter 23 mm) are immersed in a water bath at 25°C. In the bottom of each of the glass tubes 100 µl of spray solution (component A and B diluted in water at the concentration that a farmer would typically spray) are applied with a pipette. A tube is inserted in the glass tube. The ending of the inserted tube stays 25 mm above the bottom of the glass tube (i.e. the test sample). Along the inserted tube, the air contained in each individual glass tube is constantly suctioned at 250 L/h for the whole system. All glass tubes are separated from the lid by spacers, which ensure the inlet of fresh air to the glass tubes. After short time the test sample is evaporated. The system is stopped according to a defined sampling period, preferably after 24 hours. The glass tubes are taken out and washed with THF. The washing solution is analyzed by GC for the compound of interest, e.g. clomazone. The loss of compound is calculated in % of the total amount of compound applied in the initial 100 µl sample. The reference test samples for the quantification of the initial applied Clomazone contain also THF. Each value is generated from 3 to 4 independent measurements. This method allows determining the relative volatility of a certain compound depending on the additional compounds present in a certain composition.

Test experiment 1: Influence of the presence of dimethenamid on the volatility of clomazone in herbicidal compositions

Following the test method from above, a wettable powder (WP) comprising clomazone has been studied in terms of the volatility of Clomazone as dependent of the addition of Dimethenamid and/or solvents typically used in agricultural formulations. The preparation of the test sample simulated the spray solution as it would be applied in the field. Non-encapsulated Clomazone (as WP formulation) was prepared at 100 g/ha with 200 L water/ha. Paraffinic oil, rapeseed oil methyl ester and the aromatic solvent were added at 335 g/ha, while Dimethenamid was added at 500 g/ha. For the solvents, an appropriate emulsifier system was added. The sample size was 100 µl. The volatility test was carried out at 25°C and the operating time was 24h.

The test samples were as follows:

| | Control | CE1 | CE2 | CE3 | IE1 | IE2 |
|---|---|---|---|---|---|---|
| Clomazone (100 g/ha) | + | + | + | + | + | + |
| Dimethenamid (500 g/ha) | - | - | - | - | + | + |
| Solvent (335 g/ha) | - | Paraffinic oil | Rapeseed oil methyl ester | Aromatic Solvesso^{™}200 ND* | Aromatic Solvesso^{™}200 ND* | - |

| | | | | | | |
|---|---|---|---|---|---|---|
| *complex mixture of aromatic C₁₀-C₁₃ hydrocarbons (Exxon Mobil Chemical). | | | | | | |

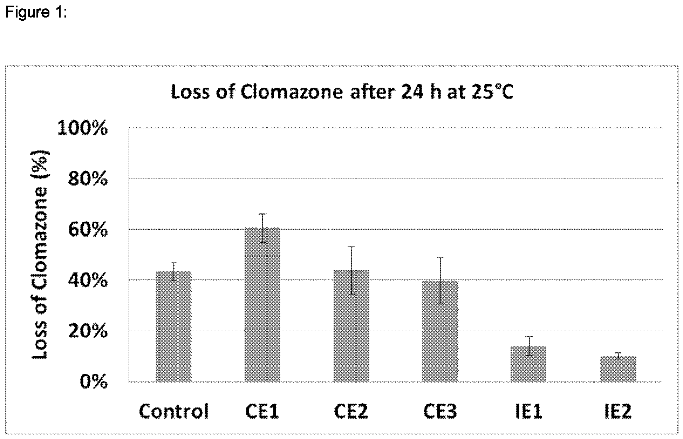

The volatility of clomazone has been determined for each sample according to the method from above. The results are shown in Fig. 1.

Conclusions for test experiment 1: Dimethenamid significantly reduces the volatility of clomazone in the composition while the tested solvents had little or no effect on volatility of clomazone.

Comparative test experiment 2: Influence of dimethyl fatty acids amides on the volatility of clomazone in herbicidal compositions

Solvents typically used in crop protection agents were tested for comparative purposes. As comparison dimethenamid (dimethenamid P) was also tested, but differently from example 1, the test sample solution was prepared at 335 g/ha.CE3 was included again. Two controls were included in the experiment. For the solvents, an appropriate emulsifier system was added. The volatility test was carried out at 25°C, the operating time was 24h. The sample size was 100 µl.

***) comparative only**

| | Control | IE2 | IE3* | CE4* | CE5* | CE3* | CE7* | Control |
|---|---|---|---|---|---|---|---|---|
| Clomazone (100 g/ha) | + | + | + | + | + | + | + | + |
| Dimethenamid (335 g/ha) | - | + | - | - | - | - | - | - |
| Solvent (335 g/ha) | - | - | Dimethyl C10 amide (Hallcomid M10) | DMSO | A | B | 1,2-propylen glycol | - |

| | | | | | | | | |
|---|---|---|---|---|---|---|---|---|
| Solvent A: Aromatic Solvesso^{™}150 ND*: aromatic C₁₀ hydrocarbons (Exxon Mobil Chemical. Solvent B: Aromatic Solvesso^{™}200 ND*: complex mixture of aromatic C₁₀-C₁₃ hydrocarbons). | | | | | | | | |

Conclusions from test experiment 2: Dimethenamid and dimethyl amides of fatty acids (comparative) are able to significantly reduce the volatility of clomazone in herbicidal compositions.

Comparative test experiment 3: Influence of chain length in fatty acid amides on volatility of clomazone in herbicidal compositions

Various fatty acid amides (comparative) were tested as additional components in herbicidal compositions with respect to the question if volatility of clomazone in such compositions is affected. For the solvents, an appropriate emulsifier system was added. The volatility test was carried out at 25°C, the operating time was 24h. The sample size was 100 µl.

| | Active ingredient (100 g/ha) | Solvent / carboxylic acid amide (335 g/ha) |
|---|---|---|
| IE4* | Clomazone | Dibutylpropionamide |
| IE5* | Clomazone | Mixture of C10 to C25 fatty acids, dimethyl amide (Agnique AMD C10-C25) |
| IE6* | Clomazone | C12 fatty acid, dimethyl amide |
| | | (Agnique AMD C12) |
| IE7* | Clomazone | C10 fatty acid, dimethyl amide (Aqnique KE 3308, AMD 10) |
| IE8* | Clomazone | Mixture of C8, C10 fatty acids, dimethyl amide (Agnique AMD 810) |
| IE9* | Clomazone | C8 fatty acid, dimethyl amide (Agnique AMD 8) |
| Control | Clomazone | No solvent, no carboxylic acid amide |

| | | |
|---|---|---|
| *) comparative only | | |

Conclusions from comparative test experiment 3: Dimethyl amides of carboxylic acids (comparative), particularly those of C10 fatty acid are able to significantly reduce the volatility of clomazone in herbicidal compositions.

Test experiment 4: Influence of standing time of the spray solution coming from the composition with respect to the volatility of clomazone

The effect of standing time of the spray solution on the volatility of clomazone depending on type of formulation was studied in this test experiment. The concentration of Clomazone was for all composition 100 g/ha (with 200 L water/ha). Dimethenamide was added at 500 g/ha. Spray solutions were prepared and added to the tubes after a standing time in the lab of 0, 3 and 6 hours, respectively. The volatility test was carried out at 25°C, the operating time was 24h. The sample size was 100 µl.

| Test | Composition type | Active ingredient | Standing time |
|---|---|---|---|
| A* | Microcapsules + Suspension concentrate | Clomazone / metazachlor | 0h |
| B* | Microcapsule suspension | Clomazone | 0h |
| C | Wettable powder+a.i. partner | Clomazone, dimethenamid | 0h |
| A* | Microcapsules + Suspension concentrate | Clomazone / metazachlor | 3h |
| B* | Microcapsule suspension | Clomazone | 3h |
| C | Wettable powder+a.i. partner | Clomazone, dimethenamid | 3h |
| A* | Microcapsules + Suspension concentrate | Clomazone / metazachlor | 6h |
| B* | Microcapsule suspension | Clomazone | 6h |
| C | Wettable powder+a.i. partner | Clomazone, dimethenamid | 6h |

| | | | |
|---|---|---|---|
| A: Nimbus^{®}CS; B: Centium^{®}CS; C: Centium^{®}WP and Spectrum^{®} *) comparative only | | | |

Conclusions from test experiment 4: The wetted powder formulation of clomazone to which dimethenamid was added in the tank has the lowest value for the measured volatility and also the most stable behaviour during extending standing times.

Comparative test experiment 5: Reduction of volatility of clomazone in the presence of other herbicidal compounds (B)

| | Component A (100 g/ha) | Component B (335 g/ha | Loss of clomazone (%) ± sd, 24h, 25°C |
|---|---|---|---|
| IE10* | Clomazone WP | Pendimethalin EC | 13.8 ± 2.3 |
| | (Centium^{®}) | (Stomp Super) | |
| IE11* | | S-Metolachlor EC (Dual Gold) | 14.1 ± 2.8 |

| | | | |
|---|---|---|---|
| *) comparative only | | | |

As already reported in the above test experiments, under the identical measurement conditions and using the same test method for the volatility, the loss of Clomazone for Clomazone WP (solo) is at least 40 to 55 % after 24h at 25°C, i.e. much higher than the volatilities measured in test experiment 5.

Conclusions from comparative test experiment 5: The additional alternative compounds (B) according to the present invention, Pendimethalin (comparative) and Metalochlor (comparative), equally support the claimed reduction of volatility of Clomazone in the compositions.

## Claims

1. Use of a compound (B) for reducing the volatility of clomazone in a herbicidal composition, comprising the step of adding the compound (B) to the herbicidal composition comprising clomazone, wherein the compound (B) is defined by the following formula (IIb): 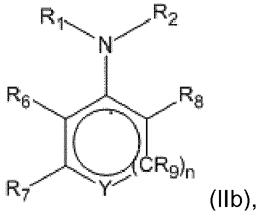 wherein:
R₁ is selected from: -CH₃, -CH2-CH3, -(CH2)2-CH3, -C(CH3)-CH3, acyl, preferably formyl, acetyl, propionyl, halogenated acyl, like halogenated acetyl, halogenated propionyl, more preferably -CO-CH₂Cl, -CO-CHClCH₃, -CO-CH₂-CH₂Cl
R₂ is selected from :
linear or branched, optionally chlorinated and/or hydroxylated, C₁ to C₆ alkyl, preferably methyl, ethyl propyl, butyl, pentyl, hexyl, isopropyl, isobutyl, sec-butyl, tert-butyl, 1-ethylpropyl, 2-ethylpropyl, and methoxylated or ethoxylated C₁ to C₆ alkyl, preferably methoxymethyl, 1-methoxy-ethyl, 2-methoxy-ethyl, 1-methoxy-1-propyl, 2-methoxy-1-propyl, 1-methoxy-2-propyl, 2-methoxy-2-propyl, 2-methoxy-3-propyl, 1-ethoxy-ethyl, 2-ethoxy-ethyl, 1-ethoxy-1-propyl, 2-ethoxy-1-propyl, 1-ethoxy-2-propyl, 2-ethoxy-2-propyl, 2-ethoxy-3-propyl, and N-(1H-pyrazol-1-ylmethyl),
R₆, R₇, R₈ and R₉ are independently selected from:
linear or branched, saturated or unsaturated, optionally hydroxy-substituted C₁ to C₆ alkyl, preferably -H, -CH₃, -CH₂-CH₃, -(CH₂)₂-CH₃, -C(CH₃)-CH₃, -Cl, -OH or -NO₂,
Y is S, and
n is 0.

2. The use according to claim 1, wherein the compound (B) is defined by the following formula (IIIa):

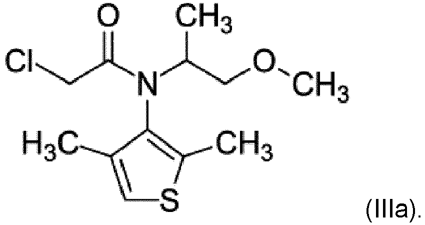

3. The use according to claim 1 or 2, wherein the compound (B) has water-solubility of not higher than 50 g/L, preferably not higher than 40 g/L.

4. The use according to one of the preceding claims, wherein the compound (B) has vapor pressure of less than 1 Pa at ambient temperature.

5. The use according to one of the preceding claims, wherein the compound (B) is a liquid at standard ambient temperature of 25°C and standard ambient pressure of 100 kPa or an amorphous solid.

6. The use according to one of the preceding claims, wherein the ratio of (A) clomazone to compound (B) in the formulation for agricultural end use is from 1:12 to 1:0.5, preferably 1:10 to 1:3, more preferably 1:7 to 1:5, based on the weight of the compounds.

7. The use according to one of the preceding claims, wherein the relative amount of compound (B) in the formulation for agricultural end use is not higher than 90 % by weight, preferably not higher than 80 % by weight, more preferably not higher than 70 % by weight, and most preferably not higher than 60 % by weight, based on the total weight of the composition.

8. The use according to one of the preceding claims, wherein the clomazone is a non-encapsulated clomazone, preferably not encapsulated by a polymer.

9. The use according to one of the preceding claims, wherein the composition is formulated as an emulsion, an emulsifiable concentrate or a suspension.

10. The use as defined in one of the preceding claims 1 to 9 for reducing the volatility of clomazone in a herbicidal composition, wherein the reduction in volatility of clomazone in the herbicidal composition is at least 5 %, more preferably 10 %, even more preferably 20 %, even more preferably 30 %, and most preferably 40 %, relative to the volatility of clomazone in the herbicidal composition without compound (B).

## Patentansprüche

1. Verwendung einer Verbindung (B) zur Verringerung der Flüchtigkeit von Clomazon in einer herbiziden Zusammensetzung, umfassend den Schritt des Zugebens der Verbindung (B) zu der herbiziden Zusammensetzung, die Clomazon umfasst, wobei die Verbindung (B) durch die folgende Formel (IIb) definiert ist: 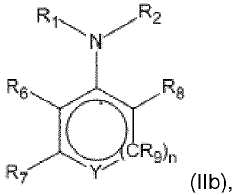 wobei:
R₁ aus -CH₃, -CH₂CH₃, -(CH₂)₂-CH₃, -C(CH₃)-CH₃, Acyl, vorzugsweise Formyl, Acetyl, Propionyl, halogeniertem Acyl, wie halogeniertem Acetyl, halogeniertem Propionyl, weiter bevorzugt -CO-CH₂Cl, -CO-CHCl-CH₃, -CO-CH₂-CH₂Cl, ausgewählt ist,
R₂ aus linearem oder verzweigtem, gegebenenfalls chloriertem und/oder hydroxyliertem, C₁- bis C₆-Alkyl, vorzugsweise Methyl, Ethyl, Propyl, Butyl, Pentyl, Hexyl, Isopropyl, Isobutyl, sec-Butyl, tert-Butyl, 1-Ethylpropyl, 2-Ethylpropyl, und methoxyliertem oder ethoxyliertem C₁-C₆-Alkyl, vorzugsweise Methoxymethyl, 1-Methoxyethyl, 2-Methoxyethyl, 1-Methoxy-1-propyl, 2-Methoxy-1-propyl, 1-Methoxy-2-propyl, 2-Methoxy-2-propyl, 2-Methoxy-3-propyl, 1-Ethoxyethyl, 2-Ethoxyethyl, 1-Ethoxy-1-propyl, 2-Ethoxy-1-propyl, 1-Ethoxy-2-propyl, 2-Ethoxy-2-propyl, 2-Ethoxy-3-propyl und N-(1H-Pyrazol-1-ylmethyl), ausgewählt ist, R₆, R₇, R₈ und R₉ unabhängig aus linearem oder verzweigtem, gesättigtem oder ungesättigtem, gegebenenfalls hydroxysubstituiertem C₁- bis C₆-Alkyl, vorzugsweise -H, -CH₃, -CH₂-CH₃, -(CH₂)₂-CH₃, -C(CH₃)-CH₃, -Cl, -OH oder -NO₂, ausgewählt sind,
Y für S steht und
n für 0 steht.

2. Verwendung nach Anspruch 1, wobei die Verbindung (B) durch die folgende Formel (IIIa) definiert ist:

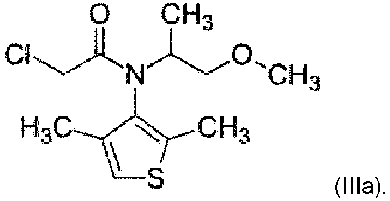

3. Verwendung nach Anspruch 1 oder 2, wobei die Verbindung (B) eine Wasserlöslichkeit von nicht mehr als 50 g/l, vorzugsweise nicht mehr als 40 g/l, aufweist.

4. Verwendung nach einem der vorhergehenden Ansprüche, wobei die Verbindung (B) einen Dampfdruck von weniger als 1 Pa bei Umgebungstemperatur aufweist.

5. Verwendung nach einem der vorhergehenden Ansprüche, wobei die Verbindung (B) bei Standard-Umgebungstemperatur von 25 °C und Standard-Umgebungsdruck von 100 kPa flüssig ist oder ein amorpher Feststoff ist.

6. Verwendung nach einem der vorhergehenden Ansprüche, wobei das Verhältnis von (A) Clomazon zu Verbindung (B) in der Formulierung für die landwirtschaftliche Endverwendung 1:12 bis 1:0,5, vorzugsweise 1:10 bis 1:3, weiter bevorzugt 1:7 bis 1:5, bezogen auf das Gewicht der Verbindungen beträgt.

7. Verwendung nach einem der vorhergehenden Ansprüche, wobei die relative Menge von Verbindung (B) in der Formulierung für die landwirtschaftliche Endverwendung nicht mehr als 90 Gew.-%, vorzugsweise nicht mehr als 80 Gew.-%, weiter bevorzugt nicht mehr als 70 Gew.-% und ganz besonders bevorzugt nicht mehr als 60 Gew.-%, bezogen auf das Gesamtgewicht der Zusammensetzung, beträgt.

8. Verwendung nach einem der vorhergehenden Ansprüche, wobei es sich bei dem Clomazon um ein nicht verkapseltes, vorzugsweise nicht durch ein Polymer verkapseltes, Clomazon handelt.

9. Verwendung nach einem der vorhergehenden Ansprüche, wobei die Zusammensetzung als Emulsion, emulgierbares Konzentrat oder Suspension formuliert ist.

10. Verwendung gemäß einem der vorhergehenden Ansprüche 1 bis 9 zur Verringerung der Flüchtigkeit von Clomazon in einer herbiziden Zusammensetzung, wobei die Verringerung der Flüchtigkeit von Clomazon in der herbiziden Zusammensetzung mindestens 5 %, weiter bevorzugt 10 %, noch weiter bevorzugt 20 %, noch weiter bevorzugt 30 % und ganz besonders bevorzugt 40 %, bezogen auf die Flüchtigkeit von Clomazon in der herbiziden Zusammensetzung ohne Verbindung (B), beträgt.

## Revendications

1. Utilisation d'un composé (B) pour la réduction de la volatilité de clomazone dans une composition herbicide, comprenant l'étape d'ajout du composé (B) à la composition herbicide comprenant de la clomazone, le composé (B) étant défini par la formule suivante (IIb) : 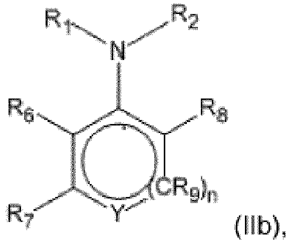
R₁ étant choisi parmi : -CH₃, -CH₂-CH₃, -(CH₂)₂-CH₃, -C(CH₃)-CH₃, acyle, préférablement formyle, acétyle, propionyle, acyle halogéné comme acétyle halogéné, propionyle halogéné, plus préférablement -CO-CH₂Cl, -CO-CHClCH₃, -CO-CH₂-CH₂Cl,
R₂ étant choisi parmi :
alkyle en C₁ à C₆ linéaire ou ramifié, éventuellement chloré et/ou hydroxylé, préférablement méthyle, éthyle, propyle, butyle, pentyle, hexyle, isopropyle, isobutyle, sec-butyle, tert-butyle, 1-éthylpropyle, 2-éthylpropyle, et alkyle en C₁ à C₆ méthoxylé ou éthoxylé, préférablement méthoxyméthyle, 1-méthoxy-éthyle, 2-méthoxy-éthyle, 1-méthoxy-1-propyle, 2-méthoxy-1-propyle, 1-méthoxy-2-propyle, 2-méthoxy-2-propyle, 2-méthoxy-3-propyle, 1-éthoxy-éthyle, 2-éthoxy-éthyle, 1-éthoxy-1-propyle, 2-éthoxy-1-propyle, 1-éthoxy-2-propyle, 2-éthoxy-2-propyle, 2-éthoxy-3-propyle, et N-(1H-pyrazol-1-ylméthyle),
R₆, R₇, R₈ et R₉ are indépendamment choisis parmi : alkyle en C₁ à C₆ linéaire ou ramifié, saturé ou insaturé, éventuellement substitué par hydroxy, préférablement -H, -CH₃, -CH₂-CH₃, -(CH₂)₂-CH₃, -C(CH₃)-CH₃, -Cl, -OH ou -NO₂,
Y étant S, et
n étant 0.

2. Utilisation selon la revendication 1, le composé (B) étant défini par la formule suivante (IIIa) :

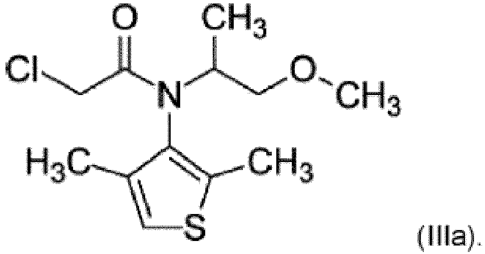

3. Utilisation selon la revendication 1 ou 2, le composé (B) ayant une solubilité dans l'eau non supérieure à 50 g/L, préférablement non supérieure à 40 g/L.

4. Utilisation selon l'une des revendications précédentes, le composé (B) ayant une pression de vapeur de moins de 1 Pa à température ambiante.

5. Utilisation selon l'une des revendications précédentes, le composé (B) étant un liquide à température ambiante standard de 25 °C et pression ambiante standard de 100 kPa ou un solide amorphe.

6. Utilisation selon l'une des revendications précédentes, le rapport de (A) clomazone sur composé (B) dans la formulation pour une utilisation finale agricole étant de 1 : 12 à 1 : 0,5, préférablement de 1 : 10 à 1 : 3, plus préférablement de 1 : 7 à 1 : 5, sur la base du poids des composés.

7. Utilisation selon l'une des revendications précédentes, la quantité relative de composé (B) dans la formulation pour une utilisation finale agricole n'étant pas supérieure à 90 % en poids, préférablement n'étant pas supérieure à 80 % en poids, plus préférablement n'étant pas supérieure à 70 % en poids, et le plus préférablement n'étant pas supérieure à 60 % en poids, sur la base du poids total de la composition.

8. Utilisation selon l'une des revendications précédentes, la clomazone étant une clomazone non encapsulée, préférablement non encapsulée par un polymère.

9. Utilisation selon l'une des revendications précédentes, la composition étant formulée comme une émulsion, un concentré pouvant être émulsifié ou une suspension.

10. Utilisation telle que définie dans l'une des revendications précédentes 1 à 9 pour la réduction de la volatilité de la clomazone dans une composition herbicide, la réduction de la volatilité de la clomazone dans la composition herbicide étant d'au moins 5 %, plus préférablement 10 %, encore plus préférablement 20 %, encore plus préférablement 30 %, et le plus préférablement 40 %, par rapport à la volatilité de la clomazone dans la composition herbicide sans le composé (B).
